# EUROPEAN PATENT APPLICATION

(11) **EP 4 764 973 A2**
(43) Date of publication of application: **24.06.2026**
(21) Application number: 26170352.4
(22) Date of filing: 20.09.2024
(51) Int. Cl.: G06N 10/20

(54) **MODULAR QUANTUM COMPUTING SYSTEM FOR DISTRIBUTED QUANTUM COMPUTATION VIA QUANTUM ENTANGLEMENT**

(30) Priority: 29.09.2023 US 202318478794; 29.09.2023 US 202318478809
(62) Divisional of application: 24927662.7
(71) Applicant: IonQ, Inc., College Park, MD 20740 (US)
(72) Inventor: BHASKAR, Mihir Keshav, College Park, 20740 (US); LEVONIAN, David Sarkis, College Park, 20740 (US)
(74) Representative: Keltie LLP

(57) **Abstract**

A modular quantum computing system (900), comprising a quantum entanglement network (932) subsystem configured to remotely connect separate quantum processing units, QPUs, (902, 930) using optical communications links (916), and a first QPU (902) comprising a first set of physical qubits (*q*₁*, q*₂*, q*₃)*,* designated for quantum computation operations and a second set of physical qubits (*q*₄*, q*₅), designated for quantum entanglement operations. The system further comprises a second QPU (930) comprising a third set of physical qubits (*q*₁*, q*₂*, q₃*)*,* designated for quantum computation operations and a fourth set of physical qubits (*q*₄*, q*₅), designated for quantum entanglement operations, wherein, to execute a given multi-qubit gate of a given quantum circuit (1000) between a respective one of the first set of physical qubits (*q*₁*, q*₂*, q*₃) and a respective one of the third set of physical qubits (*q*₁*, q*₂*, q*₃) the quantum entanglement network (932) subsystem is further configured to teleport a quantum state of a respective one of the second set of physical qubits (*q*₄*, q*₅) to a respective one of the fourth set of physical qubits (*q*₄*, q*₅)*.*

## Description

### BACKGROUND

Quantum computing utilizes the laws of quantum physics to process information. Quantum physics is a theory that describes the behavior of reality at the fundamental level. It is currently the only physical theory that is capable of consistently predicting the behavior of microscopic quantum objects (e.g., particles) like photons, molecules, atoms, and electrons.

A quantum computing device is a device that utilizes quantum mechanics to allow one to write, store, process and read out information encoded in quantum states, e.g., the states of quantum objects. A quantum object is a physical object that behaves according to the laws of quantum physics. The state of a physical object is a description of the object at a given time.

**In** quantum mechanics, the state of a two-level quantum system, or simply, a qubit, is a list of two complex numbers, where the sum of squared absolute values of the complex numbers (e.g., |*x*|² + |*y*|²) must sum to one. Each of the two complex numbers (e.g., *x* and *y*) is called an amplitude, and their respective quasi-probabilities are the squared absolute values of the complex numbers (e.g., |*x*|² and |*y*|², respectively). Hence, the square of the absolute value of each complex number corresponds to the probability of event zero or event one happening. A fundamental and counterintuitive difference between a probabilistic bit (e.g., a traditional zero or one bit) and the qubit is that a probabilistic bit represents a lack of information about a two-level classical system, while a qubit contains maximal information about a two-level quantum system.

Quantum computing devices are based on such quantum bits (qubits), which may experience the phenomena of "superposition" and "entanglement." Superposition allows a quantum system to be in multiple states at the same time. For example, whereas a classical computer is based on bits that are either zero or one, a qubit may be both zero and one at the same time, with different probabilities assigned to zero and one. Entanglement is a strong correlation between quantum particles, such that the quantum particles are inextricably linked in unison even if separated by great distances.

There are different types of qubits that may be used in quantum computers, each having different advantages and disadvantages. For example, some quantum computers may include qubits built from superconductors, trapped ions, semiconductors, photons, etc. Each may experience different levels of interference, errors, and decoherence. Also, some may be more useful for generating particlar types of quantum circuits or quantum algorithms, while others may be more useful for generating other types of quantum circuits or quantum algorithms.

### BRIEF DESCRIPTION OF THE DRAWINGS

FIG. 1 illustrates resources of a service provider network that provide quantum entanglement distribution to customer endpoints connected to intermediate quantum repeater nodes in a trust-free region outside of the trusted locations of the service provider network, according to some embodiments.
FIG. 2 illustrates two quantum repeaters which are configured to maintain a buffer of established, pairwise quantum entanglement instances using respective quantum memory locations within said repeaters, according to some embodiments.
FIG. 3 illustrates how quantum entanglement may be extended by performing Bell state measurements between received particles of respective sets of entangled particles and particles within quantum memory locations of established, pairwise quantum entanglement instances at respective quantum repeater locations, according to some embodiments.
FIG. 4 illustrates an example of interactions between incoming particles of respective sets of entangled particles and subsequent storage of quantum information into quantum memory locations within a quantum repeater, according to some embodiments.
FIGs. 5A - 5C illustrate examples of utilizing established, pairwise quantum entanglement instances between two quantum repeaters to perform Bell state measurements and extend quantum entanglement distribution based on network demand, according to some embodiments.
FIGs. 6A - 6C illustrate examples of maintaining a buffer of established, pairwise quantum entanglement instances while respective ones of the pairwise quantum entanglement instances are being consumed for extending quantum entanglement distribution, according to some embodiments.
FIGs. 7A and 7B illustrate interactions of a given quantum repeater within a quantum entanglement network, wherein the given quantum repeater is configured to maintain buffers of established, pairwise quantum entanglement instances with multiple other quantum repeaters within the quantum entanglement network, according to some embodiments.
FIG. 8A is a flowchart illustrating a process of maintaining a buffer of established, pairwise quantum entanglement instances between two quantum repeaters, according to some embodiments.
FIG. 8B is a flowchart illustrating a process of fulfilling a request to provide endpoint-to-endpoint distributed quantum entanglement, wherein said process at least includes utilizing an established, pairwise quantum entanglement instance between two intermediate quantum repeater nodes within an endpoint-to-endpoint pathway across the quantum entanglement network, according to some embodiments.
FIG. 9 illustrates an example of a modular quantum computing system that is configured to perform multi-qubit gate operations between separate quantum processing units (QPUs) that are connected across a quantum entanglement network for distributed quantum computation, according to some embodiments.
FIG. 10A illustrates an example of a quantum circuit that includes multi-qubit gate operations, according to some embodiments.
FIG. 10B is a flowchart illustrating a process of performing multi-qubit gate operations of the quantum circuit shown in FIG. 10A, wherein at least some of the multi-qubit gate operations are performed across QPUs of a modular quantum computing system, according to some embodiments.
FIG. 11 illustrates an example of performing a multi-qubit gate operation across two QPUs of a modular quantum computing system, wherein the two QPUs are connected across a quantum entanglement network for distributed quantum computation, according to some embodiments.
FIG. 12 illustrates an example of an elastic quantum computing service which allocates a certain number of QPUs that are connected across a quantum entanglement network to be used to execute a customer's quantum circuit, and then orchestrates execution of the quantum circuit using the allocated QPUs, according to some embodiments.
FIG. 13 illustrates further examples of an elastic quantum computing service which may allocate various combinations of QPUs that are located at several different quantum hardware premises for use in executing respective quantum circuits, according to some embodiments.
FIG. 14 is a flowchart illustrating a process of executing a quantum circuit using modular quantum computing resources of an elastic quantum computing service, according to some embodiments.
FIG. 15 is a block diagram illustrating an example classical computing device that may be used in at least some embodiments.

While embodiments are described herein by way of example for several embodiments and illustrative drawings, those skilled in the art will recognize that embodiments are not limited to the embodiments or drawings described. It should be understood, that the drawings and detailed description thereto are not intended to limit embodiments to the particular form disclosed, but on the contrary, the intention is to cover all modifications, equivalents and alternatives falling within the spirit and scope as defined by the appended claims. The headings used herein are for organizational purposes only and are not meant to be used to limit the scope of the description or the claims. As used throughout this application, the word "may" is used in a permissive sense (i.e., meaning having the potential to), rather than the mandatory sense (i.e., meaning must). Similarly, the words "include," "including," and "includes" mean including, but not limited to. When used in the claims, the term "or" is used as an inclusive or and not as an exclusive or. For example, the phrase "at least one of x, y, or z" means any one of x, y, and z, as well as any combination thereof.

### DETAILED DESCRIPTION

The present disclosure relates to methods and systems for providing on-demand, distributed quantum entanglement for customers of a distributed quantum entanglement service. By establishing and subsequently maintaining a buffer of pairwise quantum entanglement instances between respective quantum repeater nodes of a quantum entanglement network, a speed at which distributed quantum entanglement may be provided to customers is not limited due to latency of establishing a pairwise quantum entanglement instance post reception of a request for providing distributed quantum entanglement. Rather, a buffer of established, pairwise quantum entanglement instances may be maintained such that, at any moment prior to receiving a request for distributed quantum entanglement, during providing said distributed quantum entanglement, and after having provided said distributed quantum entanglement, one or more instances of pairwise quantum entanglement are preprepared and ready for consumption upon reception of a request for distributed quantum entanglement.

The present disclosure also relates to providing distributed quantum computation using a modular quantum computing system. An elastic quantum computing service may be configured to allocate two or more quantum processing units (QPUs) that may be remotely connected across a quantum entanglement network. Then, said allocated two or more QPUs may be used to execute a given quantum circuit, wherein multi-qubit gates of the quantum circuit may be performed across the allocated QPUs via quantum teleportation of a quantum state pertaining to a respective multi-qubit gate. By adapting an overall quantum compute capacity to meet various performance characteristics and/or needs of a given quantum circuit execution at hand (e.g., circuit depth, types of quantum gates being performed, etc.), distributed quantum computation across multiple QPUs is enabled, as opposed to previously implemented designs of quantum circuit executions using a single QPU, wherein quantum compute capacity was strictly limited by a number of physical qubits within the single QPU.

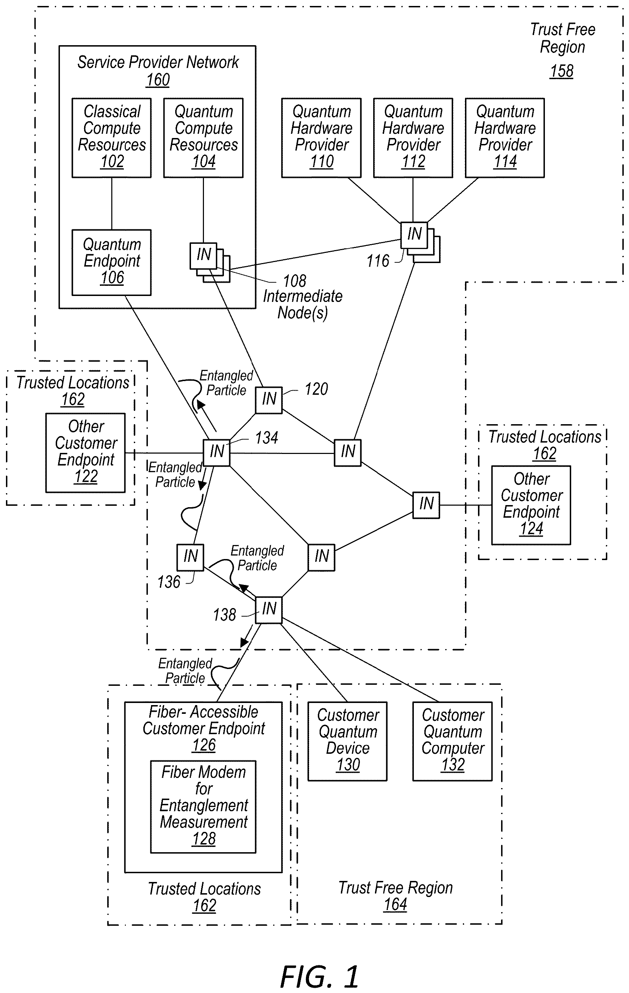

FIG. 1 illustrates resources of a service provider network that provide quantum entanglement distribution to customer endpoints connected to intermediate quantum repeater nodes in a trust-free region outside of the trusted locations of the service provider network, according to some embodiments.

In some embodiments, distribution of quantum entanglement may include distribution using multiple intermediate nodes (e.g., quantum repeaters) and may be used to distribute quantum entanglement to various types of endpoints. In some embodiments, locations outside of the trust guarantees of service provider network 160 may include intermediate nodes 120 located in trust free region 118. Also, in some embodiments service provider network 160 may further include intermediate nodes 108. Additionally, in some embodiments, intermediate nodes 116, which may be included in trusted locations 162 or trust free region 118, may connect service provider network 160 to quantum hardware providers 110, 112, and/or 114 that offer one or more types of quantum computing resources to customers of service provider network 160. For example, quantum hardware providers 110, 112, and 114 may be connected to service provider network 160 via intermediate nodes 116 and/or may be connected to other intermediate nodes in trust free region 118 via intermediate nodes 116. Additionally, various different customers of service provider network may be connected in a way that distributed quantum entanglement can be distributed to the various other customers. For example, other customer endpoints 122 and 124 are connected to intermediate nodes 120 in trust free region 118.

In some embodiments, a customer endpoint may include one or more types of endpoint devices. For example, in some embodiments a customer endpoint may include a fiber-accessible customer endpoint 126, which is connected to a fiber modem for entanglement measurement 128. Additionally, or alternatively a customer endpoint may include a customer quantum device 130, for example for performing quantum measurements, or may include a full-fledged customer quantum computer 132.

In some embodiments, customer quantum computing device 130 and/or customer quantum computer 132 may further include a conversion interface. For example, in some embodiments, the conversion interface may convert a transmission frequency of a received particle to a different frequency and/or convert a frequency of an outgoing particle to a different frequency. For example, in some embodiments, fiber optical links may transmit photons using different frequency wavelengths and such variations may be adjusted via a conversion interface of customer quantum computing device 130 and/or customer quantum computer 132.

In some embodiments, the classical computing services of a service provider network 160 may be implemented using classical computing resources 102. Also, in some embodiments, the quantum computing services may be implemented using quantum computing resources 104 of service provider network 160 or may be implemented using quantum processing units (QPUs) of quantum hardware providers 110, 112, or 114 connected to service provider network 160 via intermediate nodes 108 and/or 116 (as shown in FIG. 1).

As an example, a customer associated with fiber-accessible customer endpoint 126 may request entanglement distribution between fiber-accessible customer endpoint 126 and service provider network 160 in order to provide quantum secure communication between fiber-accessible customer endpoint 126 and classical compute resources 102 providing classical computing services to the customer. In response, routing may cause intermediate node 134 (which may be an entangled particle source node) to distribute respective particles of entangled particle pairs to quantum endpoint 106 and intermediate node 136 (which may be a quantum repeater node). Also, routing may cause intermediate node 138 (which may be an entangled particle source node) to distribute respective particles of entangled particle pairs to fiber-accessible customer endpoint 126 and intermediate node 136 (e.g., a quantum repeater node). Additionally, routing may instruct intermediate node 136 to perform joint quantum measurements on the received entangled quantum particles to extend the quantum entanglement such that quantum entanglement is distributed between quantum endpoint 106 and fiber-accessible customer endpoint 126. Because quantum endpoint 106 is within trusted location 162 (e.g., located at a data center with classical compute resources 102), secure communications may be exchanged between fiber-accessible customer endpoint 126 and classical compute resources 102 without concern for third parties intercepting or altering the communications as they flow through trust free region 118. Note that, in a similar manner, secure communications may be extended to quantum computing resources 104 and/or QPUs of quantum hardware providers 110, 112, or 114.

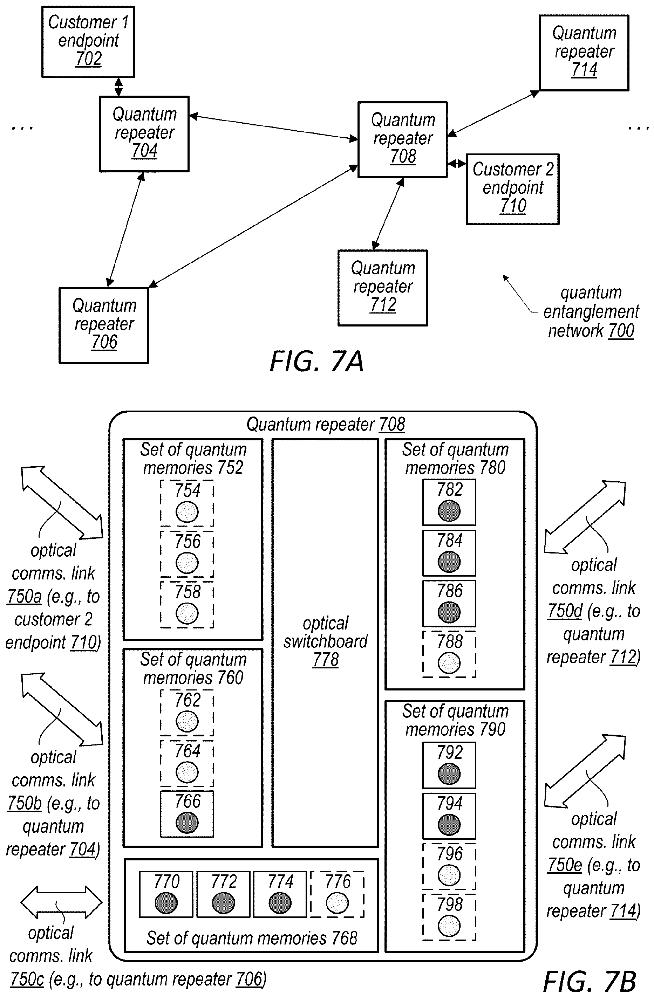

Note that as shown in FIG. 1 a given intermediate node such as intermediate node 120, 134, 108, 116, etc. may be connected to more than two network links (see also discussion pertaining to FIGs. 7A - 7B herein). Thus, routing may select respective links to be used for a given intermediate node to form part of a network path from a larger group of network links connected to the respective intermediate node. In this way various different network paths for distributing quantum entanglement may be performed by selecting different combinations of network links from a larger set of network links connected to the respective ones of the intermediate nodes.

In some embodiments any one of the intermediate nodes may introduce a unitary transformation that requires distribution of state information in order for recipients to determine whether measurement results correlate or anti-correlate. Also, in some embodiments, more than one intermediate node may introduce a unitary transformation, in which case state information for each unitary transformation introduced would be needed to determine whether measurement results correlate or anti-correlate.

### Buffers of pairwise quantum entanglement instances for distribution of quantum entanglement

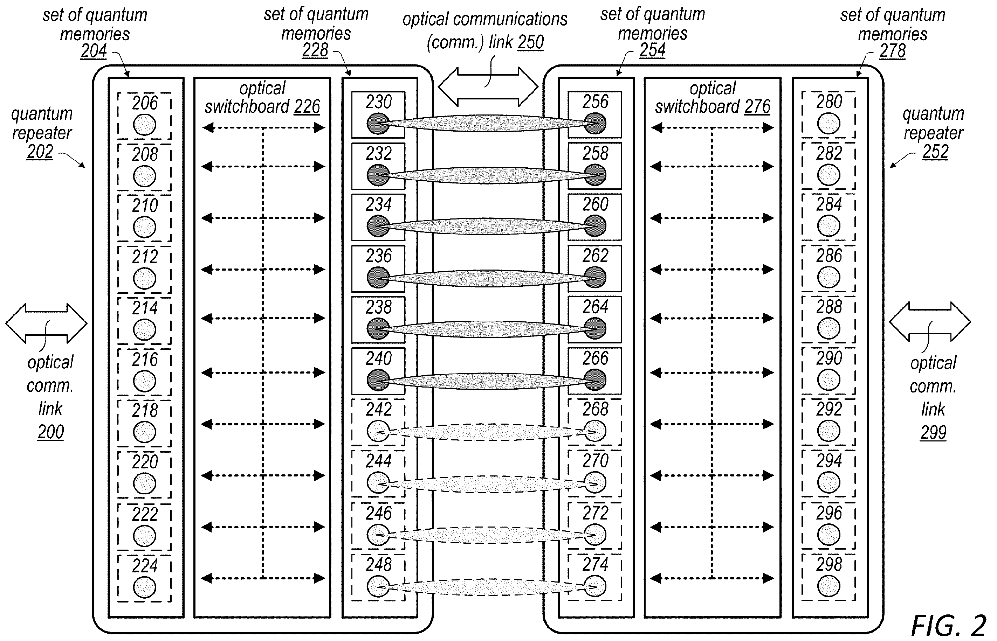

FIG. 2 illustrates two quantum repeaters which are configured to maintain a buffer of established, pairwise quantum entanglement instances using respective quantum memory locations within said repeaters, according to some embodiments.

In some embodiments, quantum repeaters 202 and 204 resemble two intermediate nodes within a quantum entanglement network, such as those embodiments shown in FIGs. 1 and 7A, herein. Within quantum repeater 202, a plurality of quantum memory locations may be utilized for providing distributed quantum entanglement services. For example, a given subset of the plurality of quantum memory locations, such as quantum memories 206, 208, 210, 212, 214, 216, 218, 220, 222, and 224 within set of quantum memories 204, may be designated for receiving particles, via optical communications link 200, and subsequently storing corresponding quantum information into respective ones of the said set of quantum memories 204. In another example, another given subset of the plurality of quantum memory locations, such as quantum memories 230, 232, 234, 236, 238, 240, 242, 244, 246, and 248 within set of quantum memories 228, may be designated for maintaining respective pairwise quantum entanglement instances with quantum memories within another designated set of quantum memories 254 of quantum repeater 252. Sizes and distributions of set of quantum memories 204 and 228 within an overall total of quantum memory locations provided within quantum repeater 202 may vary according to expected demand within the quantum entanglement network, according to some embodiments, and examples shown in FIG. 2 are meant to be illustrative in nature (see also discussion pertaining to quantum repeater 708 in FIG. 7B herein). Optical switchboard 226 may then be used to perform Bell state measurements between any of the quantum memory locations of set of quantum memories 204 and any of the quantum memory locations of set of quantum memories 228.

Similarly for quantum repeater 252, a given subset of the plurality of quantum memory locations, such as quantum memories 280, 282, 284, 286, 288, 290, 292, 294, 296, and 298 within set of quantum memories 278, may be designated for receiving particles, via optical communications link 299, and subsequently storing corresponding quantum information into respective ones of the said set of quantum memories 278. In another example, another given subset of the plurality of quantum memory locations, such as quantum memories 256, 258, 260, 262, 264, 266, 268, 270, 272, and 274 within set of quantum memories 254, may be designated for maintaining respective pairwise quantum entanglement instances with quantum memories within the designated set of quantum memories 228 of quantum repeater 202.

In some embodiments, a given established, pairwise quantum entanglement instance may be referred to herein by referring to corresponding quantum memory locations that said instance pertains to. For example, at a moment in time depicted in FIG. 2, six established, pairwise quantum entanglement instances are within a buffer of established quantum entanglement between quantum repeaters 202 and 252, as shown with regard to quantum memory locations 230 and 256, 232 and 258, 234 and 260, 236 and 262, 238 and 264, and 240 and 266. Furthermore, at the moment in time depicted in FIG. 2, four additional instances of pairwise quantum entanglement are being attempted (for eventual establishment) between quantum repeaters 202 and 252, as shown with regard to quantum memory locations 242 and 268, 244 and 270, 246 and 272, and 248 and 274.

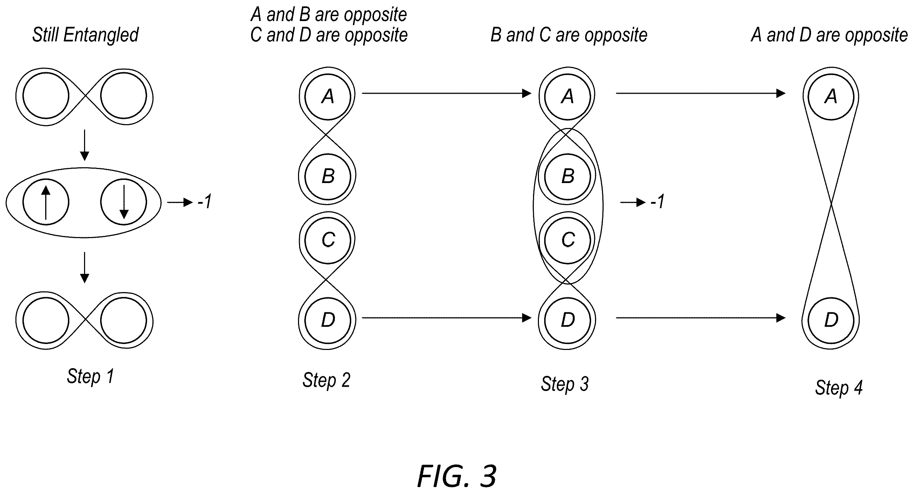

FIG. 3 illustrates how quantum entanglement may be extended by performing Bell state measurements between received particles of respective sets of entangled particles and particles within quantum memory locations of established pairwise quantum entanglement instances at respective quantum repeater locations, according to some embodiments.

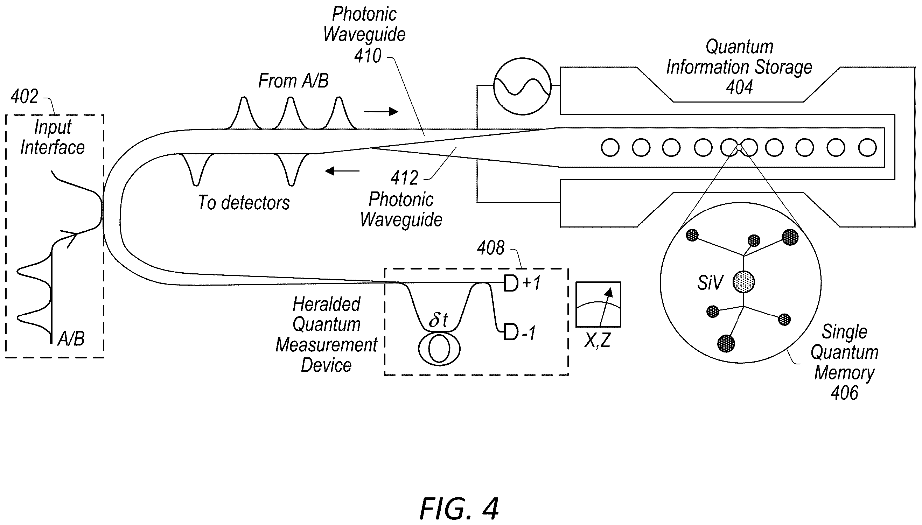

In some embodiments, joint measurements (e.g., Bell state measurements), as shown in FIG. 3, may be performed between any respective one of the quantum memories within set of quantum memories 204 and any respective one of the quantum memories within set of quantum memories 228, when using quantum repeater 202 as an example. For example, at step 1, a joint measurement is performed that measures two particles (e.g., photons) in such a way as that the joint measurement only determines if the two particles are the same or opposite (e.g., in the same quantum state or not). This is done without revealing information about the individual particles (e.g., a non-demolition measurement). Then, at step 2, the entangled pairs are defined by their correlations, e.g., opposite or the same. In the example shown in FIG. 3, both A/B and C/D are entangled such that they are opposites. Next, at step 3 a joint measurement is performed on B/C with an outcome (e.g., opposite or same), which is opposite in the example case shown in FIG. 3. This tells A that its compliment is the opposite D's compliment, allowing A and D to infer they are opposites. Then, using this information at step 4 A/D the particles are now entangled such that they are always in the opposite state. In some embodiments, the joint measurements may be performed using a local two-qubit gate between B and C and using an optical switchboard (e.g., optical switchboard 226 in the example of quantum repeater 202), and may further include measuring each bit individually. This can be understood as an entangling operation and a measurement, or conversely as a single measurement in an "entangled basis." When the joint measurements are performed in this way, the results reveal information about the correlations between particles, such as particles B and C, but not information about the particles themselves. This is due to the entanglement generated by the two-qubit operation. Such joint measurements may be performed at a quantum measurement device (see also heralded quantum measurement device 408, shown in FIG. 4), wherein the quantum measurement device may be located within a quantum repeater or directly connected to components of the quantum repeater depending upon a given architecture, according to some embodiments.

FIG. 4 illustrates an example of interactions between incoming particles of respective sets of entangled particles and subsequent storage of quantum information into quantum memory locations within a quantum repeater, according to some embodiments.

In some embodiments, quantum information storage locations within a given quantum repeater (e.g., quantum memories within set of quantum memories 204 and 228 within quantum repeater 202, etc.) may be configured to interact with light, such that a quantum repeater may be configured to receive photons in a superposition state to an on-chip storage. In some embodiments, such on-chip storage may resemble respective quantum memories, such as single quantum memory 406, which may be patterned into quantum information storage 404, as shown in FIG. 4. In some embodiments, quantum information storage 404 may be configured to couple with photonic waveguides 410 and 412 in order to receive incoming photons. Quantum information storage 404 may then be configured to trap light via through-holes shown in FIG. 4 which may function as mirrors, according to some embodiments.

In some embodiments, quantum memories patterned into quantum information storage 404 may include nanophotonic cavities, such as the nanophotonic cavity shown in single quantum memory 404, which illustrates a silicon vacancy in diamond structure. In such embodiments, the silicon vacancies are embedded into nanophotonic cavities within a bulk substrate material, which may be diamond in such cases. A silicon vacancy in diamond structure, such as single quantum memory 404, may act as a quantum memory storage, and a corresponding nanophotonic cavity (e.g., through-holes patterned with diamond, etc.) may allow light to interface with said silicon vacancy in diamond structure. In other embodiments, however, quantum memories may resemble other interior features embedded into a material, such as nitrogen-vacancy in diamond, trapped atoms, ensemble doped crystals, atomic vapors, silicon carbide emitters, single rare earth dopants, trapped ions, superconducting qubits, quantum dots in gallium arsenide, defect centers in silicon or other semiconducting materials, etc.

In some embodiments, quantum memories may provide a method of receiving, storing, and providing quantum information. In some cases, quantum memory devices may be deployed for use in large-scale optical fiber networks and/or quantum entanglement networks, for example as quantum repeaters, that store and effectively connect distributed entangled particles to provide secure, long-distance communications. In such applications, quantum memories depicted in FIG. 4 and implemented into a quantum repeater may function such that tuning (e.g., adjustments to the local electrical, optical, thermal, electromechanical environment) of the quantum memories (e.g., single quantum memory 406) may be housed and controlled within the given quantum repeater.

In some embodiments, a quantum memory based architecture, such as that which is shown in FIG. 2, which includes quantum information storage devices, may resemble that which is depicted in FIG. 4. As additionally shown in FIG. 4, an input interface 402 may be configured to receive particles in a superposition state to quantum information storage 404, which comprises single quantum memory 406, and may be configured to couple to heralded quantum measurement device 408 via photonic waveguide layer 412. For example, single quantum memory 406 illustrates a silicon vacancy in diamond structure. Though in some embodiments, other structures such as: nitrogen-vacancy in diamond, trapped atoms, ensemble doped crystals, atomic vapors, silicon carbide emitters, single rare earth dopants, trapped ions, superconducting qubits, quantum dots in gallium arsenide, etc. may be used. Furthermore, input interface 402 illustrates an embodiment of a time-bin qubit encoding conversion module, however other embodiments with other input interface configurations may be used, including wavelength or mode matching.

In some embodiments, input interface 402 may be configured to couple with photonic waveguide layer 410. Photonic waveguide layer 410 may be a material that may be patterned such that optical waveguides may be formed into the material (e.g., silicon nitride, lithium niobate, aluminum nitride, etc.). It may be additionally optically transparent within one or more given wavelength ranges (e.g., a visible light spectrum), and may also have nonlinear optical and/or electrooptical properties. Photonic waveguide layer 412 may be a material fabricated from a bulk substrate via fabrication processes and methods described herein, and may be configured to host optically active quantum memories (e.g., single quantum memory 406) within a photonic cavity described by quantum information storage 404, according to some embodiments.

In some embodiments, a given quantum repeater with architectural components shown in FIG. 4 may be configured to store quantum information corresponding to a first received entangled particle of a first pair of entangled particles in a first single quantum memory 406 of quantum information storage 404 and also store quantum information corresponding to a second received entangled particle of a second pair of entangled particles in a second single quantum memory 406 of quantum information storage 404 (e.g., using set of quantum memories 204 and set of quantum memories 228 when using quantum repeater 202 as an example). The given components of a quantum repeater architecture shown in FIG. 4 may further be configured to perform one or more joint measurements (e.g., Bell state measurements) using said quantum information storage locations by routing, using an optical switchboard, to heralded quantum measurement device 408 and without collapsing superposition states of the first and second entangled particles (e.g., non-demolition measurements). The joint measurements may determine a correlation relationship between the superposition states of the entangled particles such that entanglement can be extended between the pairs of entangled particles.

In some embodiments, a given quantum repeater architecture may be configured to herald reception of particles, meaning that when a particle arrives to the given quantum repeater, the quantum measurement device 408 (or other device coupled to quantum information storage 404) issues a heralding signal announcing the arrival of the particle. In some embodiments, such a heralding signal may be used to operate an optical switch to align the switch such that the quantum memory receives a next particle from an entangled particle source with which quantum entanglement is to be distributed. Furthermore, when the second particle arrives at the quantum repeater, a second heralding signal may be issued. The second heralding signal may then cause joint measurements to be performed. With regard to description herein of maintaining a buffer of established, pairwise quantum entanglement instances, it may not be necessary to wait for a heralding signal of a second particle reception, as one or more pairwise quantum entanglement instances will have been prepared and ready for such on-demand quantum entanglement distribution.

Furthermore, the joint measurements may be used to extend, at least in part, the entanglement between two endpoints of a quantum entanglement network. In some embodiments, a device such as that which is shown in FIG. 4 may perform heralding measurements and joint measurements, or in some embodiments, different quantum measurement devices 408 may be used to perform heralding measurements and joint measurements on received particle pairs. In some embodiments, the heralding function may be performed by a quantum non-destruction measuring device that can detect a particle (e.g., photon) entering the quantum repeater without causing the particle to be collapsed out of the superposition state.

In some embodiments, a quantum repeater may further include a conversion interface. For example, in some embodiments, the conversion interface may convert a transmission frequency of a received particle to a different frequency. For example, in some embodiments, fiber optic links may transmit particles using different frequency wavelengths and such variations may be adjusted via a conversion interface of the quantum repeater.

In some embodiments, quantum repeaters, such as those which are described herein, may additionally include optical fiber ports and/or electrical ports that provide access points between optical fiber cables, control signal leads, electrical wires, electrical cables, etc., located external to the quantum repeater, and to various components within the quantum repeater.

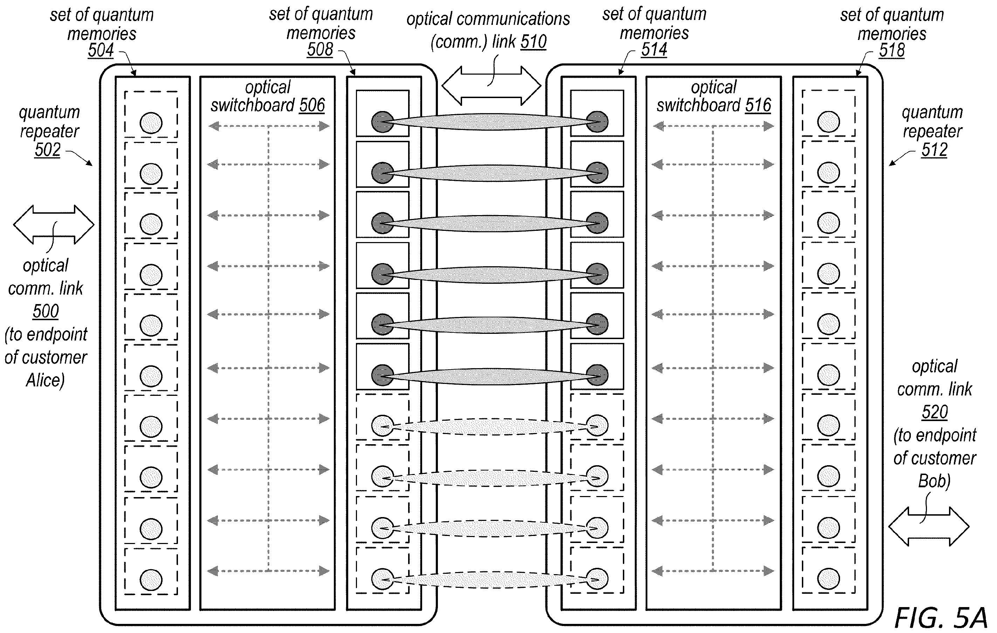

FIGs. 5A - 5C illustrate examples of utilizing established, pairwise quantum entanglement instances between two quantum repeaters to perform Bell state measurements and extend quantum entanglement distribution based on network demand, according to some embodiments.

At a given moment in time depicted in FIG. 5A, there are six established, pairwise quantum entanglement instances within a buffer of established quantum entanglement between quantum repeaters 502 and 512, which are connected via optical communications link 510. As shown in the figure, at said moment in time, quantum repeaters 502 and 512 may not actively be part of a request for providing distributed quantum entanglement, as evidenced by empty quantum memory locations within set of quantum memories 504 and set of quantum memories 518.

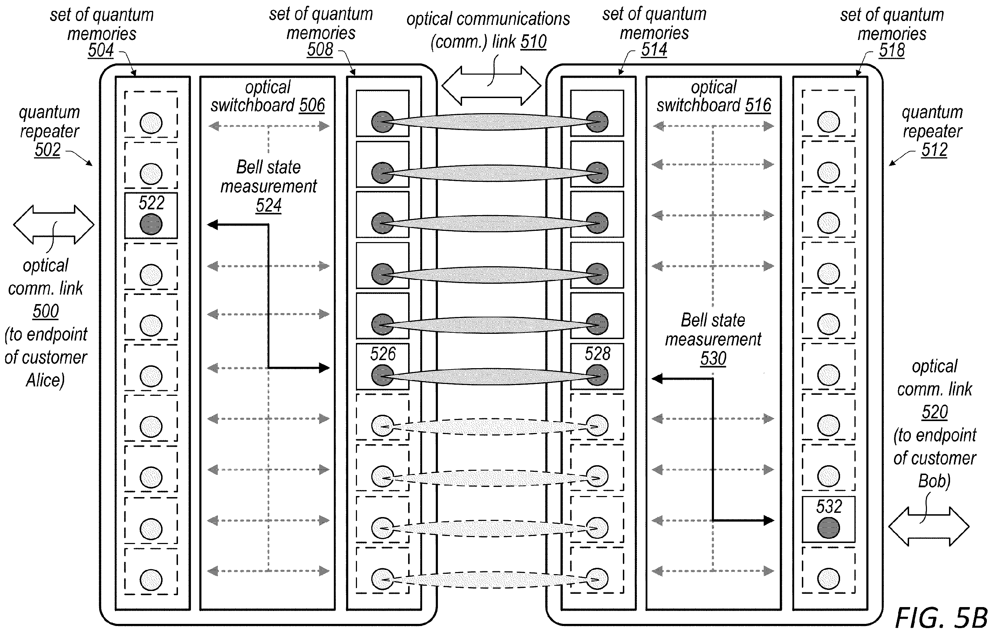

As depicted in FIG. 5B, at a later moment in time, providing endpoint-to-endpoint distributed quantum entanglement between an endpoint of customer Alice and an endpoint of customer Bob may be on-going. As quantum repeaters 502 and 518 may be configured to be part of an overall optical communications pathway to provide said endpoint-to-endpoint distributed quantum entanglement, one of the six already established, pairwise quantum entanglement instances of the buffer shown in FIG. 5B may be allocated for consumption, such as the established, pairwise quantum entanglement instance between quantum memory locations 526 and 528, according to some embodiments.

Upon reception, via optical communications link 500, of an entangled particle to quantum repeater 502, which shares entanglement with a particle received at the endpoint of customer Alice, and storage of corresponding quantum information into quantum memory location 522, a Bell state measurement 524 may be performed between quantum memory locations 522 and 526, using optical switchboard 506. Similarly, upon reception, via optical communications link 520, of a different entangled particle to quantum repeater 512, which shares entanglement with a particle received at the endpoint of customer Bob, and storage of corresponding quantum information into quantum memory location 532, a Bell state measurement 530 may be performed between quantum memory locations 528 and 532, using optical switchboard 516.

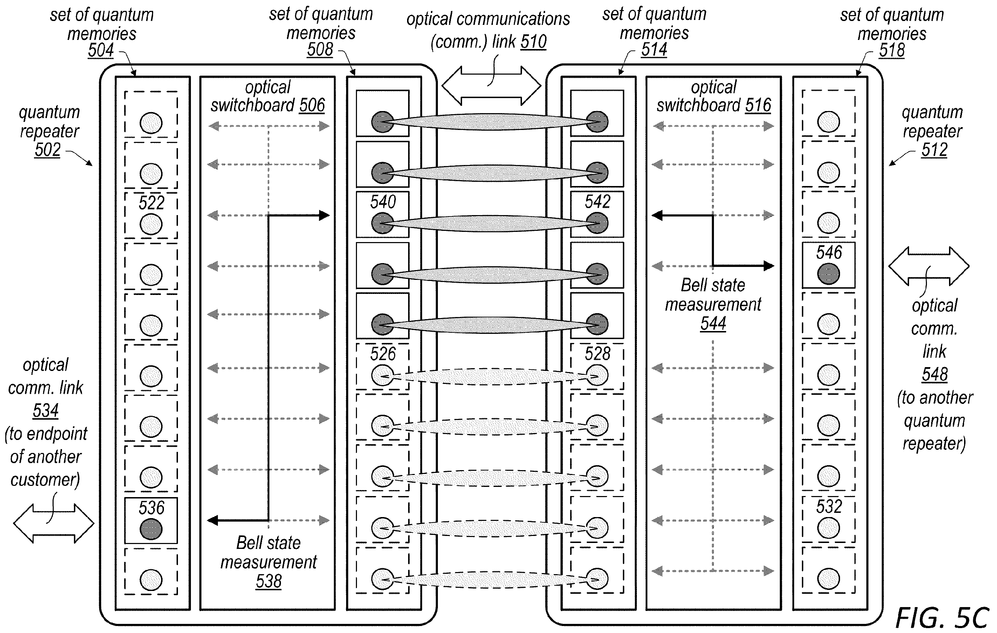

As shown using depictions in FIGs. 5A, 5B, and 5C, established, pairwise quantum entanglement instances between quantum repeater 502 and 512 may be applied towards providing distributed quantum entanglement between customer Alice and customer Bob, such that on-demand quantum entanglement services may be ensured. Moreover, based on flexibility in routing provided by respective optical switchboards on said quantum repeaters, another established, pairwise quantum entanglement instance of the buffer may then be used to further provide distributed quantum entanglement for another set of customers, as shown in FIG. 5C.

As shown in FIG. 5C, at a moment in time that is later than the moment in time depicted in FIG. 5B, a quantum entanglement instance between quantum memory locations 526 and 528 has been consumed in order to provide distributed quantum entanglement for customers Alice and Bob. A new quantum entanglement instance, using available quantum memory locations at the respective quantum repeaters, will now attempt to be reestablished in order to maintain the buffer of established, pairwise quantum entanglement instances between quantum repeaters 502 and 512.

Furthermore, the moment in time depicted in FIG. 5C may resemble another moment when providing distributed quantum entanglement, using at least quantum repeaters 502 and 512, is also on-going. As discussed above with regard to FIG. 5B, one of the already established, pairwise quantum entanglement instances of the buffer shown in FIG. 5C may be allocated for consumption, such as the established, pairwise quantum entanglement instance between quantum memory locations 540 and 542, according to some embodiments. As such, upon reception, via optical communications link 534, of an entangled particle to quantum repeater 502, which shares entanglement with a particle received at the endpoint of the other customer, and storage of corresponding quantum information into quantum memory location 536, a Bell state measurement 538 may be performed between quantum memory locations 536 and 540, using optical switchboard 506. Similarly, upon reception, via optical communications link 548, of a different entangled particle to quantum repeater 512, which shares entanglement with a particle received at another quantum repeater within the quantum entanglement network, and storage of corresponding quantum information into quantum memory location 546, a Bell state measurement 544 may be performed between quantum memory locations 542 and 546, using optical switchboard 516.

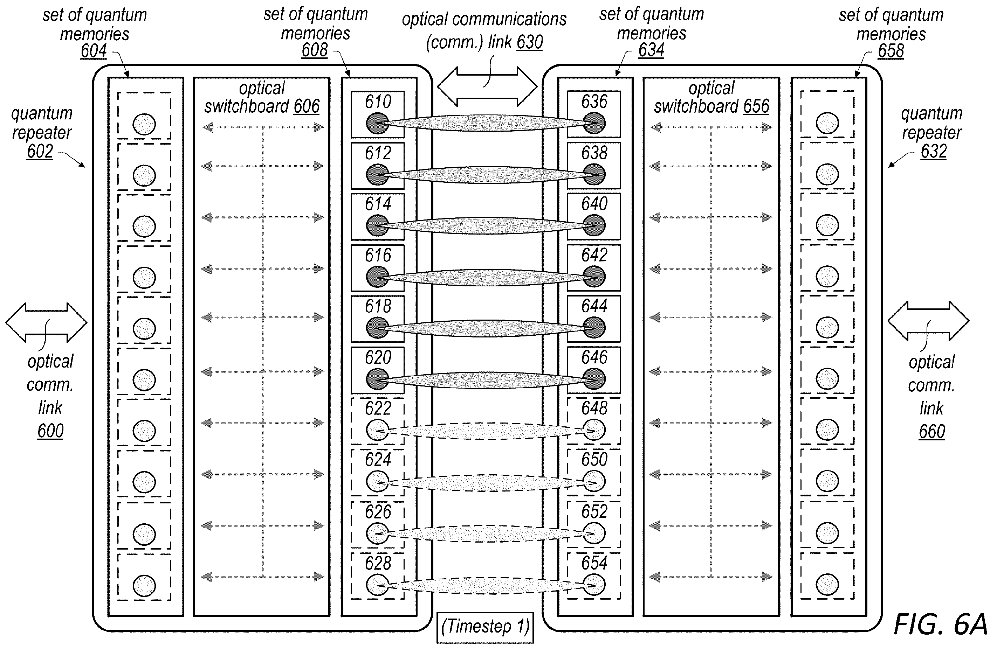

FIGs. 6A - 6C illustrate examples of maintaining a buffer of established, pairwise quantum entanglement instances while respective ones of the pairwise quantum entanglement instances are being consumed for extending quantum entanglement distribution, according to some embodiments.

In some embodiments, FIGs. 6A - 6C illustrate three moments in time in which, with respect to the moment in time depicted in FIG. 6A, various established, pairwise quantum entanglement instances of a buffer between quantum repeaters 602 and 632 are consumed for providing distributed quantum entanglement. In order to maintain a buffer of established, pairwise quantum entanglement instances between quantum repeaters 602 and 632, establishment of quantum entanglement may be reattempted and reestablished following events pertaining to consumption of a given pairwise quantum entanglement instance within the buffer. In some embodiments, FIGs. 6A - 6C may also illustrate three moments in time in which, with respect to the moment in time depicted in FIG. 6A, various established, pairwise quantum entanglement instances of the buffer have decayed due, at least in part, to coherence times of qubits associated with respective quantum memory locations of quantum repeaters shown in FIGs. 6A - 6C.

At a moment in time depicted in FIG. 6A (e.g., Timestep 1), there are six established, pairwise quantum entanglement instances within a buffer of established, pairwise quantum entanglement instances between quantum repeaters 602 and 612, as shown between quantum memory locations 610 and 636, 612 and 638, 614 and 640, 616 and 642, 618 and 644, and 620 and 646. As additionally shown in the figure, quantum entanglement is currently being attempted between quantum memory locations 622 and 648, 624 and 650, 626 and 652, and 628 and 654.

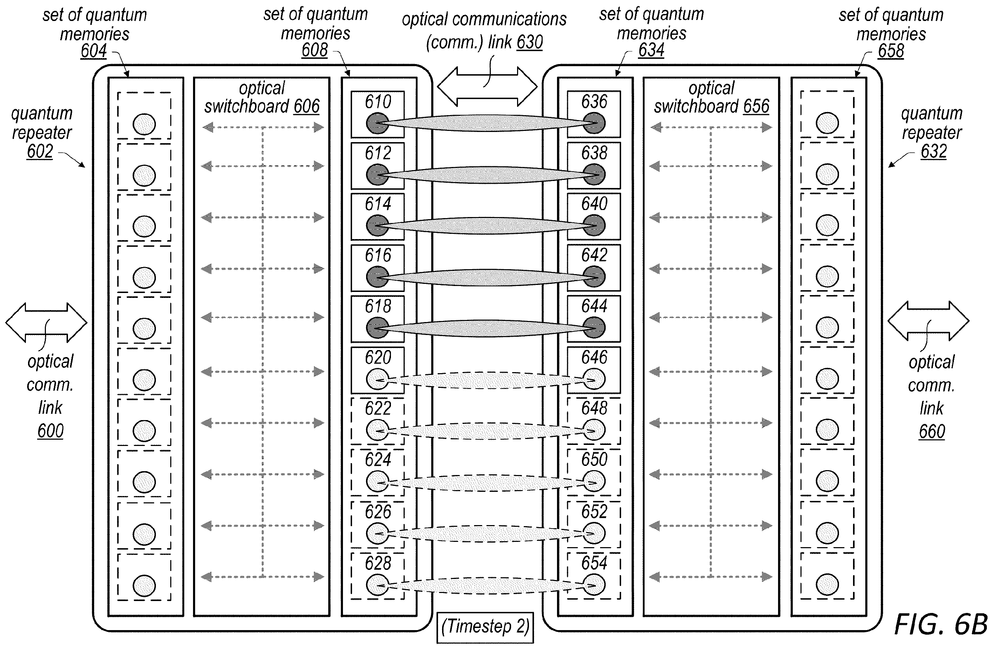

At a later moment in time depicted in FIG. 6B (e.g., Timestep 2), there are now five established, pairwise quantum entanglement instances within the buffer of established, pairwise quantum entanglement instances between quantum repeaters 602 and 612, as shown between quantum memory locations 610 and 636, 612 and 638, 614 and 640, 616 and 642, and 618 and 644. Between the moment in time depicted in FIG. 6A and the later moment in time depicted in FIG. 6B, the instance between quantum memory locations 620 and 646 may have been consumed to provide distributed quantum entanglement, or may have decayed due to elapsed time between the establishment of the instance and the duration of the coherence time of the qubits corresponding to quantum memory locations 620 and 646.

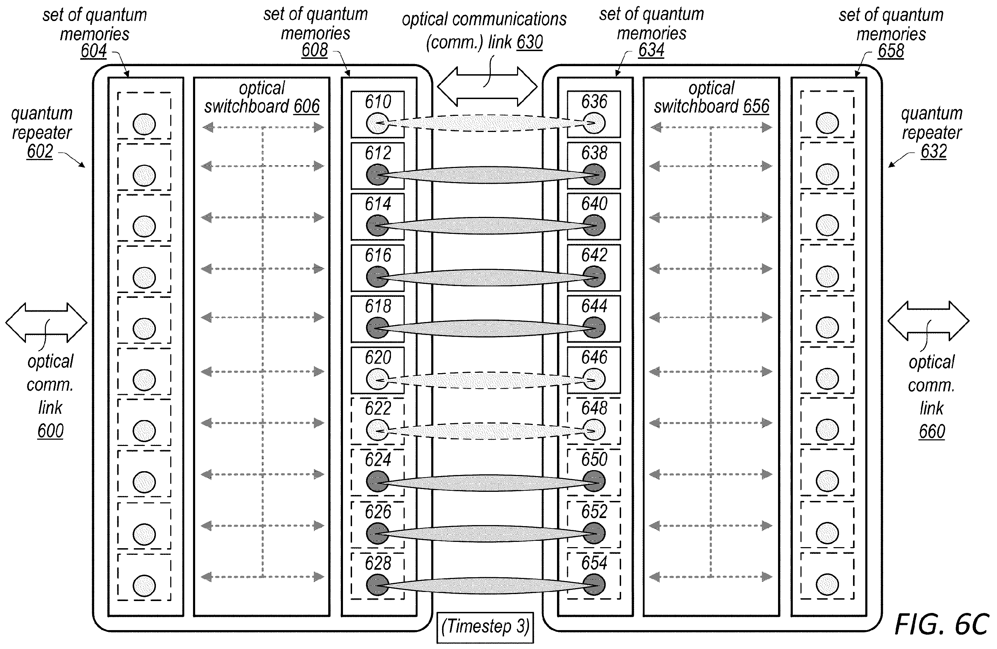

At an even later moment in time depicted in FIG. 6C (e.g., Timestep 3), there are now seven established, pairwise quantum entanglement instances within the buffer of established, pairwise quantum entanglement instances between quantum repeaters 602 and 612, as shown between quantum memory locations 612 and 638, 614 and 640, 616 and 642, 618 and 644, 624 and 650, 626 and 652, and 628 and 654. Between the moment in time depicted in FIG. 6B and the later moment in time depicted in FIG. 6C, the instance between quantum memory locations 610 and 636 may have been consumed to provide distributed quantum entanglement, or may have decayed due to elapsed time between the establishment of the instance and the duration of the coherence time of the qubits corresponding to quantum memory locations 610 and 636. Furthermore, additional pairwise quantum entanglement instances have been established between the moment in time depicted in FIG. 6B and the later moment in time depicted in FIG. 6C, and are now part of the buffer of established, pairwise quantum entanglement instances between quantum repeaters 602 and 612, as shown between quantum memory locations 624 and 650, 626 and 652, and 628 and 654.

Furthermore, as additionally shown using examples provided in FIGs. 6A - 6C herein, a buffer of established, pairwise quantum entanglement instances between quantum repeaters 602 and 632 may be continuously maintained even when quantum repeaters 602 and 632 are not being used, at moments in time depicted in FIGs. 6A - 6C, to provide distributed quantum entanglement for customers (e.g., as illustrated via empty quantum memory locations within set of quantum memories 604 and set of quantum memories 658 shown in said figures). As such, on-demand distributed quantum entanglement, when subsequent requests at later moments in time are received, may be provided without latency due to establishing quantum entanglement instances post reception of a request to provide distributed quantum entanglement.

FIGs. 7A and 7B illustrate interactions of a given quantum repeater within a quantum entanglement network, wherein the given quantum repeater is configured to maintain buffers of established, pairwise quantum entanglement instances with multiple other quantum repeaters within the quantum entanglement network, according to some embodiments.

In some embodiments, as shown in FIGs. 7A and 7B, quantum repeater 708 may be configured to maintain multiple buffers of established, pairwise quantum entanglement instances with respective other quantum repeaters within a quantum entanglement network 700. Customer endpoints 702 and 710, and quantum repeaters 704, 706, 708, 712, and 714 are meant to be used for illustrative purposes, and such embodiments such as those which are shown in FIG. 7A could similarly be discussed with regard to that which is shown in FIG. 1 and described herein.

As shown in FIGs. 7A and 7B, quantum repeater 708 may be configured such that logically designated sets of quantum memories within a total number of quantum memory locations provided within quantum repeater 708 may be allocated for interactions between quantum repeater 708 and different other quantum repeaters and/or customer endpoints within quantum entanglement network 700, depending upon a given placement of quantum repeater 708 within the larger network. For example, quantum memory locations 754, 756, and 758 within set of quantum memories 752 may be designated for reception of entangled particles with customer 2 endpoint 710; quantum memory locations 762, 764, and 766 within set of quantum memories 760 may be designated for establishing and maintaining a buffer of established, pairwise quantum entanglement instances between quantum repeater 708 and quantum repeater 704; quantum memory locations 770, 772, 774, and 776 within set of quantum memories 768 may be designated for establishing and maintaining another buffer of established, pairwise quantum entanglement instances between quantum repeater 708 and quantum repeater 706; quantum memory locations 782, 784, 786, and 788 within set of quantum memories 780 may be designated for establishing and maintaining yet another buffer of established, pairwise quantum entanglement instances between quantum repeater 708 and quantum repeater 712; and quantum memory locations 792, 794, 796, and 798 within set of quantum memories 790 may be designated for establishing and maintaining yet another buffer of established, pairwise quantum entanglement instances between quantum repeater 708 and quantum repeater 714.

In some embodiments, respective quantum memory locations within sets of quantum memories 752, 760, 768, 780, and 790 may be used to perform Bell state measurements with any of the other quantum memory locations within sets of quantum memories 752, 760, 768, 780, and 790 via the single optical switchboard 778.

Moreover, sets of quantum memories 752, 760, 768, 780, and 790, as shown in FIG. 7B, may denote logical designations of various quantum memory locations within quantum repeater 708, and any quantum memory location of a given set of quantum memories may be reallocated to another set of quantum memories within quantum repeater in order to provide more optimized on-demand distributed quantum entanglement within quantum entanglement network 700. For example, if, for a given period of time, a rate of consumption of instances within a buffer of established, pairwise quantum entanglement instances between quantum repeaters 708 and 704 appears to be trending higher than a rate of consumption of instances within another buffer of established, pairwise quantum entanglement instances between quantum repeaters 708 and 706, then one or more of the quantum memory locations within set of quantum memories 768 may be logically reallocated to set of quantum memories 760. As optical switchboard 778 will still be able to route between said quantum memory locations, such logical reallocations may provide further flexibility of the architecture described with regard to quantum repeater 708 in providing on-demand distributed quantum entanglement, and without incurring further latency.

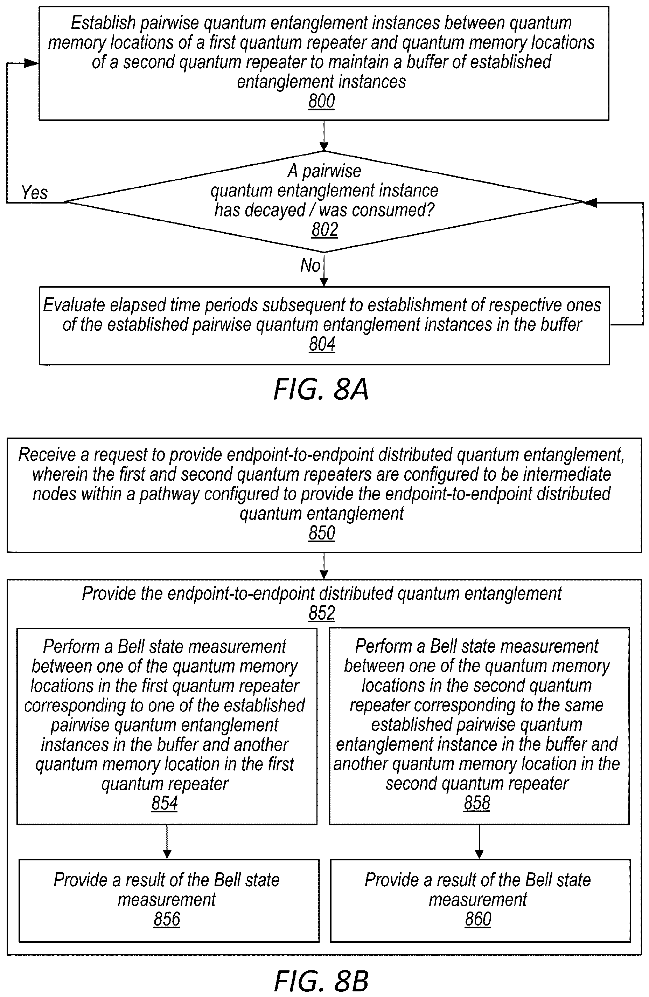

FIG. 8A is a flowchart illustrating a process of maintaining a buffer of established, pairwise quantum entanglement instances between two quantum repeaters, according to some embodiments.

In some embodiments, a buffer of pairwise quantum entanglement instances may be established, as described in block 800, and then subsequently and repeatedly maintained over time, as described in blocks 802 and 804, in order to provide on-demand distributed quantum entanglement for quantum entanglement networks, such as those shown and described with regard to FIGs. 1 - 7B. Blocks 800, 802, and 804 may represent a kind of continuous loop that is used to ensure that said buffer is maintained, even throughout events such as decay and/or consumption of respective ones of the established pairwise quantum entanglement instances within the buffer. Furthermore, said repeating loop described by blocks 800, 802, and 804 may continue to cycle and maintain the buffer of established, pairwise quantum entanglement even when there are currently no pending and/or incoming requests to provide distributed quantum entanglement (see also description pertaining to block 850), according to some embodiments.

Following establishment of a buffer as described in block 800, block 802 may then refer to a process of repeatedly monitoring of consumption of various ones of the pairwise quantum entanglement instances within the buffer, according to some embodiments. For example, and as additionally described herein with regard to FIGs. 5A - 6C, respective pairwise quantum entanglement instances may be used in performing Bell state measurements in order to provide endpoint-to-endpoint distributed quantum entanglement, causing said instances of the buffer to be consumed. Upon detecting and/or registering consumption of a given pairwise quantum entanglement instance within the buffer, pairwise quantum entanglement may be reattempted, and then subsequently reestablished, in order to maintain the buffer of established, pairwise quantum entanglement instances.

In some embodiments, block 802 may also refer to a process of repeatedly causing respective pairwise quantum entanglement instances to be reestablished following decay events of previously established pairwise quantum entanglement instances within the buffer. For example, a given pairwise quantum entanglement instance may decay after a given time period defined, at least in part, by coherence times of qubits associated with quantum memory locations corresponding to said instance. Block 804 may refer, therefore, to a component of the loop shown in FIG. 8A wherein an evaluation is made between when a given instance of the buffer was established (e.g., time *t*₀) and an amount of time that has elapsed since time *t*₀ (e.g., time period *t*₀ → *t*₁). If the time period defined by *t*₀ → *t*₁ is greater than a known coherence time of associated qubits within quantum memory locations that define a given pairwise quantum entanglement instance, then the system determines that the particular instance has decayed, and attempts to reestablish another pairwise quantum entanglement instance in order to maintain the buffer of established, pairwise quantum entanglement instances.

By monitoring the status of the established, pairwise quantum entanglement instances within a buffer (e.g., an instance is currently established and therefore represents on-going quantum entanglement, an instance has decayed, an instance has been consumed to provide distributed quantum entanglement, an instance is currently in a process of reattempting establishment of pairwise quantum entanglement, etc.), quantum entanglement may be attempted and reestablished following decay and/or consumption of respective instances in order to meet requests for providing distributed quantum entanglement both on-demand, and without latency.

FIG. 8B is a flowchart illustrating a process of fulfilling a request to provide endpoint-to-endpoint distributed quantum entanglement, wherein said process at least includes utilizing an established, pairwise quantum entanglement instance between two intermediate quantum repeater nodes within an endpoint-to-endpoint pathway across the quantum entanglement network, according to some embodiments.

In some embodiments, a request may be received to provide endpoint-to-endpoint distributed quantum entanglement, as shown in block 850. Furthermore, a given optical communications pathway that defines said endpoint-to-endpoint may include at least two quantum repeater locations, in which established, pairwise quantum entanglement instances are already prepared and ready for on-demand quantum entanglement distribution. For example, a given optical communications pathway that may be used to provide endpoint-to-endpoint distributed quantum entanglement may resemble a given one of the pathway options shown in quantum entanglement network 700 of FIG. 7A, and may include pathway points at customer 1 endpoint 702, quantum repeater 704, quantum repeater 708, and customer 2 endpoint 710, as additionally shown in FIG. 7A. As such, at a given junction between two quantum repeaters within the endpoint-to-endpoint optical communications pathway (e.g., a junction between quantum repeaters 704 and 708), a given established pairwise quantum entanglement instance of a buffer may be used when performing Bell state measurements at the locations of the first and second quantum repeaters of the given junction, as described in blocks 852, 854, and 858. Then, results of the respective Bell state measurements may be provided, as described in blocks 856 and 860, in order to provide the distributed quantum entanglement between customer 1 endpoint 702 and customer 2 endpoint 710.

### Modular quantum computing systems for distributed quantum computation

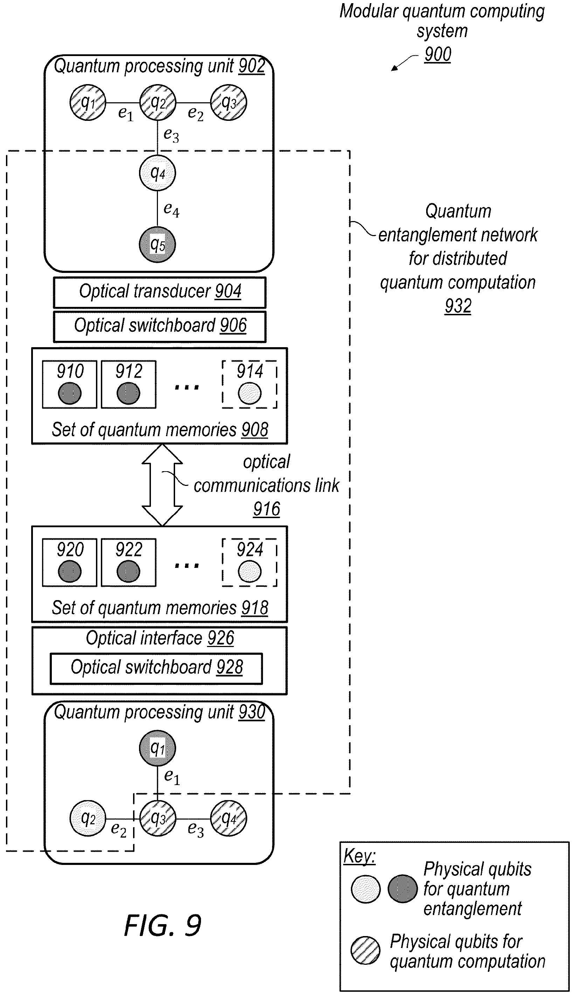

FIG. 9 illustrates an example of a modular quantum computing system that is configured to perform multi-qubit gate operations between separate quantum processing units (QPUs) that are connected across a quantum entanglement network for distributed quantum computation, according to some embodiments.

In some embodiments, methods, such as those described herein, for providing quantum entanglement distribution may also be applied towards executing quantum circuits using QPUs of a modular quantum computing system. As shown in FIG. 9, modular quantum computing system 900 includes QPU 902 and QPU 390, which may be remotely connected using an optical communication link 916 (e.g., a link established via optical fibers) of a quantum entanglement network 932.

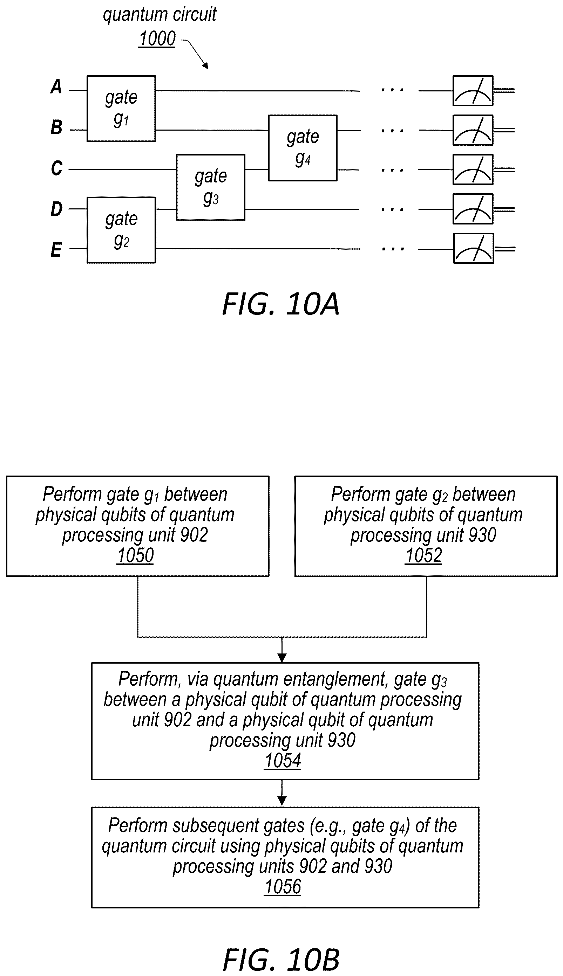

With regard to discussion herein, a quantum circuit may refer to performance of one or more quantum gates using physical qubits of a QPU. An example of a quantum circuit is additionally discussed with regard to quantum circuit 1000 in FIG. 10A herein. Furthermore, a quantum circuit may refer to a "base unit" for a quantum algorithm, a quantum task, a quantum program, or another phrase for describing a compilation of two or more quantum circuits wherein an input to a second quantum circuit may depend on an outcome of a first quantum circuit within a given quantum algorithm.

Furthermore, as related to the description herein, it may be understood that quantum hardware may be used to implement QPUs, and/or various components of QPUs (e.g., quantum processing cores, routing spaces, magic state distillation factories, other components used to perform logical quantum computations, etc.). For example, a given quantum hardware device may resemble "building blocks" of a QPU, such as a grid (e.g., a one-dimensional grid, a two-dimensional grid, etc.) of qubits that may be initialized in various ways in order to form various components of a QPU, such as topological quantum codes. Quantum hardware devices may be further configured such that single qubit gates, multi-qubit gates, and/or other operations of quantum circuits may be performed between qubits of the QPU (according to a given physical qubit connectivity graph of QPU, which details which physical qubits are connected to respective other physical qubits via edges).

In some embodiments, depending upon factors such as type(s) of qubit technologies used, type(s) of gates performed between said qubits, etc., quantum hardware devices that implement QPUs may also comprise various control devices (e.g., microwave pulse generators, devices for temperature, electronic, magnetic, and/or other environmental controls pertaining to local environments of the grid of qubits, etc.) that may be used to maintain and/or transform various properties of the qubits and/or other physical components of a given QPU. Moreover, a qubit, as referred to throughout the description herein, may refer to both a logical bit (e.g., first or second superposition states, each with some probability) and to one or more physical components used to construct the given qubit based, at least in part, on the type of qubit technology being applied. For example, a superconducting qubit (e.g., a transmon) may be constructed using at least sections of a material that is known to have certain properties of superconductivity and another material. With regard to this understanding, it should also be understood that quantum hardware may therefore be used to implement physical qubits, in ways such as those as described above, that may again be combined in various ways to implement one or more logical qubits such that logical quantum operations may be performed using said physical elements of said quantum hardware.

As shown in FIG. 9, QPUs 902 and 930 may include physical qubits, wherein respective ones of the physical qubits are connected to one another. For example, QPU 902 comprises five physical qubits, {*q₁, q₂, q₃, q₄, q₅*}, wherein physical qubits *q*₁ and *q*₂ are physically connected via edge *e*₁, physical qubits *q*₂ and *q*₃ are physically connected via edge *e*₂, physical qubits *q*₂ and *q*₄ are physically connected via edge *e*₃, and physical qubits *q*₄ and *q*₅ are physically connected via edge *e*₄. Furthermore, QPU 930 comprises four physical qubits, {*q₁, q₂, q₃, q*₄}, wherein physical qubits *q*₁ and *q*₃ are physically connected via edge *e*₁, physical qubits *q*₂ and *q*₃ are physically connected via edge *e*₂, and physical qubits *q*₃ and *q*₄ are physically connected via edge *e*₃.

As additionally shown in FIG. 9, at least one physical qubit of QPU 902 is designated for quantum computation operations (e.g., qubits *q*₁, *q₂,* and *q*₃), and at least one physical qubit is designated for quantum entanglement operations (e.g., qubits *q*₄ and *q*₅). As shown in the 'Key' within FIG. 9, darker and lighter shadings on physical qubits that are designated for quantum entanglement operations follow the above discussions of qubits that are being utilized for established pairwise quantum entanglement instances of a buffer and qubits that are being utilized for generating pairwise quantum entanglement instances to be added to the buffer, respectively, for various moments in time (see also discussion pertaining to at least FIG. 2 herein). Similar physical qubit designations may apply to QPU 930 as well, as also shown in FIG. 9.

Moreover, examples of QPUs, such as QPUs 902 and 930, are meant to be illustrative in nature, and the discussion herein is meant to encompass additional embodiments of QPUs with more or less physical qubits than those shown in FIG. 9, and/or QPUs with alternative physical qubit connectivity configurations. Furthermore, designation of certain physical qubits for quantum computation operations and/or quantum entanglement operations may refer to logical designations. Moreover, said designations may be configured based, at least in part, on respective physical qubit connectivities of corresponding QPU.

In some embodiments, in order to perform distributed quantum computation, modular quantum computing system 900 may additionally include various optical interfaces that are configured to enable transduction of quantum information between physical qubits of a given qubit technology grouping type (e.g., superconducting qubits) used to implement QPU 902 or 930 and sets of quantum memories that are used to establish and maintain pairwise quantum entanglement instances. For example, in some embodiments in which QPU 902 is implemented using superconducting qubits, optical transducer 904 may be connected to physical qubits *q*₄ and *q*₅ of QPU 902, which are designated for quantum entanglement, in order to provide transduction of quantum information for optical switchboard 906 between microwave frequencies of operation within physical qubits *q*₄ and *q*₅ of QPU 902 and optical frequencies of operation within set of quantum memories 908. Similarly, optical interface 926 may provide a similar transduction of quantum information for optical switchboard 928, depending upon a qubit technology grouping of physical qubits *q*₁ and *q*₂ of QPU 930.

Furthermore, as introduced above with regard to FIGs. 2 - 8B, quantum memories 910, 912, and 914 within a set of quantum memories 908 and quantum memories 920, 922, and 924 within a set of quantum memories 918 may be used to provide a buffer of established, pairwise quantum entanglement instances via optical communications link 916 in order to perform distributed quantum computation for modular quantum computing system 900. Respective pairwise quantum entanglement instances may be established between various combinations of memory locations 910, 912, 914, 920, 922, and 924 such that a buffer of established, pairwise quantum entanglement instances is maintained both prior to and during execution of a given quantum circuit using modular quantum computing system 900. Size of said buffer may depend upon demand for performing distributed quantum computation using modular quantum computing system 900 at a given moment in time, according to some embodiments.

FIG. 10A illustrates an example of a quantum circuit that includes multi-qubit gate operations, and FIG. 10B is a flowchart illustrating a process of performing multi-qubit gate operations of the quantum circuit shown in FIG. 10A, wherein at least some of the multi-qubit gate operations are performed across QPUs of a modular quantum computing system, according to some embodiments.

As introduced above, quantum circuit 1000 may comprise one or more quantum gates {*g*₁, *g*₂, *g*₃, *g*₄} that are performed between logical qubits {*A, B, C, D, E*}*.* In some embodiments, quantum circuit 1000 may represent a high-level circuit diagram that describes relevant information such as circuit depth, gate dependencies, etc. For example, according to quantum circuit 1000 shown in FIG. 10A, quantum gate *g*₁ must be performed using logical qubit B before gate *g*₄ is performed on logical qubit B, etc. In some embodiments, a gate dependency list for quantum circuit 1000 may resemble the following: {(*A*), (*B*)*,* (*C*)*,* (*D*)*,* (*E*)} = {(*g*₁, ... ), (*g*₁, *g*₄, ... ), (*g*₃, *g*₄, ... ), (*g*₂, *g*₃, ... ), (*g*₂, ... )}.

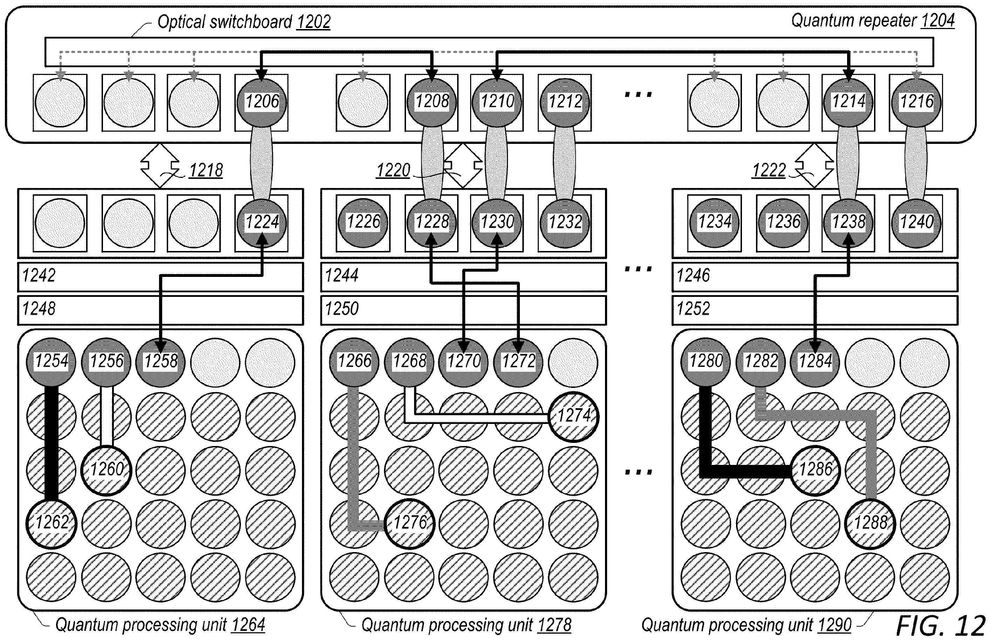

In some embodiments, modular quantum computing system 900 may be configured to execute quantum circuit 1000 using physical qubits of QPUs 902 and 930. In order to execute quantum circuit 1000, an elastic quantum computing service, such as that which is additionally discussed with regard to FIGs. 12, 13, and 14 herein, may determine gate scheduling instructions to be applied during execution of quantum circuit 1000. Said gate scheduling instructions may include a scheduling of one or more quantum gates to be performed using physical qubits of QPU 902 that are designated for quantum computation; a scheduling of one or more quantum gates to be performed using physical qubits of QPU 930 that are designated for quantum computation; and a scheduling of at least one multi-qubit quantum gate to be performed using a physical qubit designated for quantum computation of QPU 902 and a physical qubit designated for quantum computation of QPU 930.

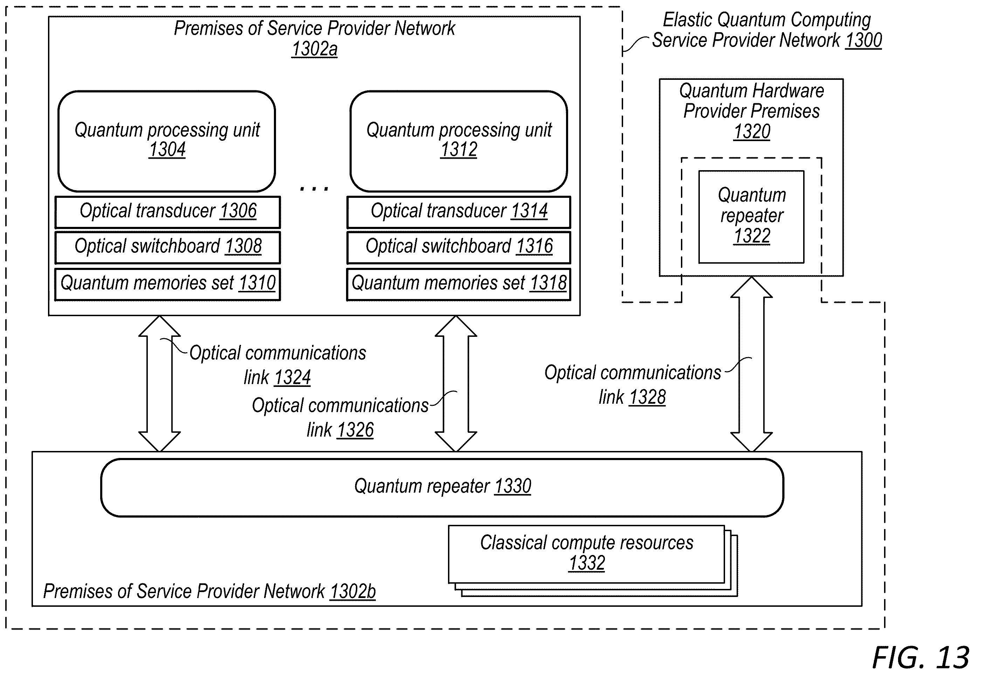

Furthermore, determining gate scheduling instructions may additionally include further pre-processing steps in advance of beginning the execution of quantum circuit 1000, such as a logical qubit to physical qubit(s) mapping step, in which respective ones of logical qubits {*A, B, C, D, E*} may be mapped to physical qubits of modular quantum computing system 900 in order to determine pathways, based on physical qubit connectivities of the different QPUs, for performing quantum gates {*g*₁, *g*₂, *g*₃, *g*₄}. For example, the five logical qubits of quantum circuit 1000 may be mapped, one-to-one, to the five physical qubits designated for quantum computation within modular quantum computing system 900 (e.g., qubits *q*₁, *q₂,* and *q*₃ of QPU 902 and qubits *q*₃ and *q*₄ of QPU 930). Additional example mapping schemes may include mapping one logical qubit to one or more physical qubits, depending upon specific QPUs of a modular quantum computing system being utilized to perform a given quantum circuit. Moreover, such a logical qubit to physical qubit(s) mapping step may additionally be used to determine a minimum number of physical qubits that are expected to be needed to be used to execute quantum circuit 1000. Continuing with the example of executing quantum circuit 1000 using modular quantum computing system 900, it may be determined that a minimum number of physical qubits that are expected to be needed to be used to execute quantum circuit 1000 is less than or equal to a total number of physical qubits available across QPUs 902 and 930, according to some embodiments. This type of pre-processing step is further discussed with regard to an elastic quantum computing service such as that shown in FIGs. 12 and 13 herein.

In some embodiments, the flowchart shown in FIG. 10B may provide illustrative representations of such gate scheduling instructions that are determined by an elastic quantum computing service. As shown in block 1050, resulting gate scheduling instructions may determine that quantum gate *g*₁ may be performed between physical qubits within QPU 902. As shown in block 1052, quantum gate *g*₂ may be performed between physical qubits within QPU 930. In some embodiments, gate scheduling instructions such as those shown in blocks 1050 and 1052 may be performed sequentially or in parallel with one another, as performance of quantum gate *q*₁ may be performed independently of quantum gate *g*₂ (e.g., quantum gate *q*₁ may be executed without reliance on an outcome of quantum gate *g*₂ and vice versa).

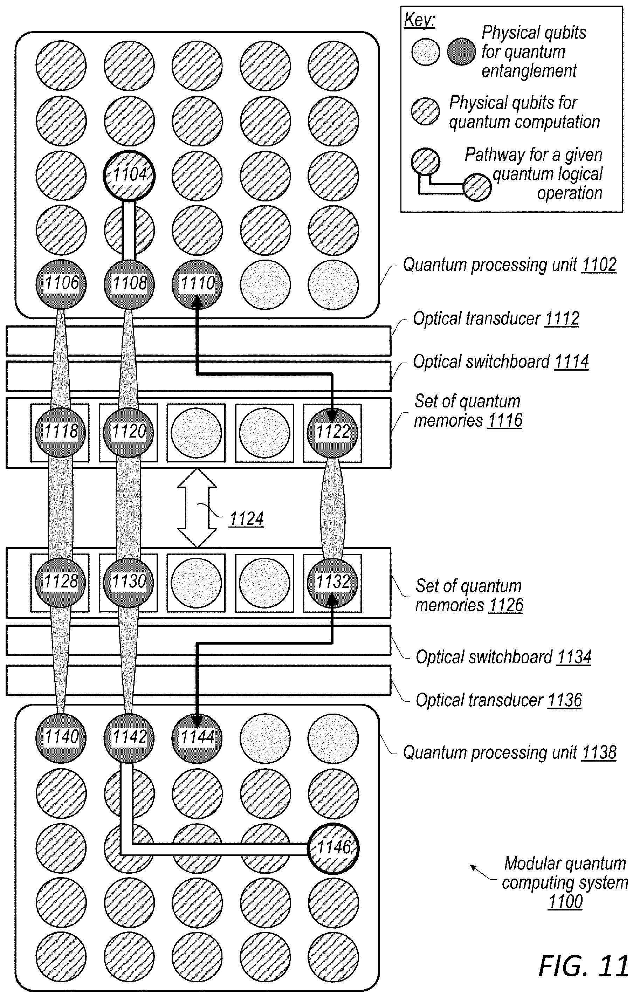

Continuing with such example gate scheduling instructions, block 1054 describes that quantum gate *g*₃ may be performed using a given physical qubit of the physical qubits designated for quantum computation within QPU 902 and a given physical qubit of the physical qubits designated for quantum computation within QPU 930. Further description pertaining to performance of a multi-qubit gate such as the one described in block 1054 is provided with regard to FIG. 11 herein. Furthermore, as described above with regard to the gate dependency list, quantum gate *g*₃ in block 1054 is performed at least sequentially after performance of quantum gate *g*₂, as quantum gate *g*₃ depends on an outcome of quantum gate *g*₂. In block 1056, quantum gate *g*₄, and any subsequent gates of quantum circuit 1000, may then be performed using various combinations of physical qubits designated for quantum computation within QPUs 902 and/or 930.

As shown using at least examples in FIGs. 10A and 10B, modular quantum computing system 900 may be configured to perform various quantum computation operations across multiple QPUs that are remotely connected via established, pairwise quantum entanglement instances, and wherein said various quantum computation operations are within a given quantum circuit (e.g., at a 'base unit' level with respect to larger scale quantum computations such as quantum algorithms, programs, etc., as additionally described above).

FIG. 11 illustrates an example of performing a multi-qubit gate operation across two QPUs of a modular quantum computing system, wherein the two QPUs are connected across a quantum entanglement network for distributed quantum computation, according to some embodiments.

In some embodiments, modular quantum computing system 1100 may resemble embodiments of modular quantum computing system 900 which is configured to perform distributed quantum computation using two or more QPUs that are remotely connected via established, pairwise quantum entanglement instances. At a moment in time depicted in FIG. 11, a multi-qubit quantum gate is being performed between physical qubit 1104 of QPU 1102 and physical qubit 1146 of QPU 1138. As additionally shown in FIG. 11, a given pairwise quantum entanglement instance of a buffer is being used to teleport a quantum state between physical qubit 1104 and physical qubit 1146, as drawn across qubits 1108, 1120, 1130, and 1142 in the figure, while additional pairwise quantum entanglement instances of the buffer, such as that which is drawn across qubits 1106, 1118, 1128, and 1140 and across qubits 1110, 1122, 1132, and 1144 in the figure represent established pairwise quantum entanglement instances that may be used for subsequent multi-qubit gates of the given quantum circuit currently being performed at the moment in time depicted in FIG. 11.

In some embodiments, the given established, pairwise quantum entanglement instance currently being consumed to teleport a quantum state between physical qubit 1104 and physical qubit 1146 may be used to distribute quantum entanglement across physical qubit 1108, through optical transducer 1114 such that it may interface with quantum memory location 1120, across optical communications link 1124 to quantum memory location 1130, and through optical transducer 1136 to physical qubit 1142. As described above with regard to FIGs. 2 - 10B, Bell state measurements may be performed wherein optical switchboards 1114 and 1134 route between various quantum memory locations of set of quantum memories 1116 and 1126 and physical qubits designated for quantum entanglement within QPUs 1102 and 1138.

In some embodiments, in order to transfer a quantum state of physical qubit 1104 to physical qubit 1108 for teleportation of said quantum information across optical communications link 1124, one or more SWAP gate operations may be performed between respective ones of the physical qubits designated for quantum computation within QPU 1102, as shown by the pathway for the given quantum logical operation in FIG. 11. Such pathways may depend on physical qubit connectivities of QPU 1102, as additionally discussed above with regard to FIG. 9 herein. Similar SWAP gate operations may be performed in order to transfer a quantum state between physical qubits 1142 and 1146 of QPU 1138, according to some embodiments.

### Elastic quantum computing services for distributed quantum computation

FIG. 12 illustrates an example of interactions between various quantum hardware devices of an elastic quantum computing service, which allocates a certain number of QPUs that are connected across a quantum entanglement network to be used to execute a customer's quantum circuit, and then orchestrates execution of the quantum circuit using the allocated QPUs, according to some embodiments.

Quantum computers may be difficult and costly to construct and operate. Also, there are varying quantum computing technologies under development with no clear trend as to which of the developing quantum computing technologies may gain prominence. A person having ordinary skill in the art may relate such current obstacles facing the scientific community as being relevant to a NISQ hardware phase within the overall development, operation, and optimization of various quantum computing technologies. Thus, potential users of quantum computers may be hesitant to invest in building or acquiring a particular type of quantum computer, as other quantum computing technologies may eclipse a selected quantum computing technology that a potential quantum computer user may invest in. Also, successfully using quantum computers to solve practical problems may require significant trial and error and/or otherwise require significant expertise in using quantum computers.

As an alternative to building and maintaining a quantum computer, potential users of quantum computers may instead prefer to rely on a quantum computing service to provide access to quantum computers. Also, in some embodiments, an elastic quantum computing service, as described herein, may enable potential users of quantum computers to access quantum computers based on multiple different quantum computing technologies and/or paradigms, without the cost and resources required to build or manage such quantum computers. Also, in some embodiments, an elastic quantum computing service, as described herein, may provide various services that simplify the experience of using a quantum computer such that potential quantum computer users lacking deep experience or knowledge of quantum mechanics, may, nevertheless, utilize quantum computing services to solve problems.

In some embodiments, an elastic quantum computing service may provide potential quantum computing users with access to QPUs (e.g., QPUs 1264, 1278, and 1290) implemented using various quantum computing technologies, such as quantum annealers, ion trap machines, superconducting machines, Rydberg atom arrays, photonic devices, etc. In some embodiments, a quantum computing service may provide customers with access to at least three broad categories of quantum computers including quantum annealers, circuit-based quantum computers, and analog or continuous variable quantum computers. As used herein, these three broad categories may be referred to as quantum computing paradigms.

In some embodiments, an elastic quantum computing service may provide access to some total number of QPUs that may be allocated and used to execute various quantum circuits. For example, QPUs 1264, 1278, and 1290 may currently be allocated for executing a given quantum circuit, such as quantum circuit 1000. At a later moment in time, QPUs 1264 and 1278 may be reallocated for execution of a different quantum circuit, and QPU 1290 and various other QPUs made accessible by the elastic quantum computing service may be reallocated for execution of yet another quantum circuit, etc. The elastic quantum computing service may be configured to provide increased quantum compute capacity by allocating multiple QPUs to be used to execute a given quantum circuit based, at least in part, on performance characteristics of the quantum circuit (e.g., circuit depth, types of quantum gates being performed, etc.) and based on demand within the overall service at a given moment in time. Furthermore, by enabling multiple QPUs to be allocated for execution of a given quantum circuit, the quantum compute capacity may be greater than if only a single QPU were to be allocated for execution of said quantum circuit.

As shown in FIG. 12, a given multi-qubit gate of the currently executing quantum circuit may involve teleportation of a quantum state between physical qubit 1262 of QPU 1264 and physical qubit 1286 of QPU 1290. As described above with regard to modular quantum computing system 1100, various SWAP gate operations may be performed between qubits 1262 and 1254, and between qubits 1286 and 1280 in order to transfer a quantum state between physical qubits designated for quantum computation and physical qubits designated for quantum entanglement, respectively.

In another example, another multi-qubit gate of the currently executing quantum circuit may involve teleportation of a quantum state between physical qubit 1260 of QPU 1264 and physical qubit 1274 of QPU 1278. As described above with regard to modular quantum computing system 1100, various SWAP gate operations may be performed between qubits 1260 and 1256, and between qubits 1274 and 1268 in order to transfer a quantum state between physical qubits designated for quantum computation and physical qubits designated for quantum entanglement, respectively.

In yet another example, a further multi-qubit gate of the currently executing quantum circuit may involve teleportation of a quantum state between physical qubit 1276 of QPU 1278 and physical qubit 1288 of QPU 1290. As described above with regard to modular quantum computing system 1100, various SWAP gate operations may be performed between qubits 1276 and 1266, and between qubits 1288 and 1282 in order to transfer a quantum state between physical qubits designated for quantum computation and physical qubits designated for quantum entanglement, respectively.

The above three examples of logical multi-qubit gate operations using physical qubits of respective ones of QPUs 1264, 1278, and 1290 may be understood to be multi-qubit gate operations that may be performed in parallel or in sequence within the overall orchestration of the execution of the given quantum circuit, depending on the gate dependencies of said quantum circuit, as additionally described above with regard to quantum circuit 1000.

As additionally described above with regard to at least quantum repeater 708, quantum repeater 1204 may be configured to provide multiple logically designated sets of quantum memories in order to provide buffers of established, pairwise quantum entanglement instances between QPUs 1264, 1278, and 1290, as drawn in FIG. 12 between quantum memory locations 1206 and 1224, 1208 and 1228, 1210 and 1230, 1212 and 1232, 1214 and 1238, and 1216 and 1240. Optical switchboard 1202 may be configured to route between any two quantum memory locations shown in quantum repeater 1204 in order to perform Bell state measurements as part of a process for providing distributed quantum computation, and similarly for respective optical switchboards 1242, 1244, and 1246, according to some embodiments. Furthermore, quantum repeater 1204 may be configured to remotely connect to sets of quantum memories that are locally connected to QPUs 1264, 1278, and 1290 using optical communications links 1218, 1220, and 1222.

As additionally described above with regard to modular quantum computing system 900, various optical transducers and/or optical interfaces 1248, 1250, and 1252 may be configured to enable transduction of quantum information between physical qubits of a given qubit technology grouping type (e.g., superconducting qubits) used to implement QPUs 1264, 1278, and 1290 and corresponding sets of quantum memories that are used to establish and maintain pairwise quantum entanglement instances, as shown in FIG. 12.

FIG. 13 illustrates further examples of an elastic quantum computing service which may allocate various combinations of QPUs that are located at several different quantum hardware premises for use in executing respective quantum circuits, according to some embodiments.

In some embodiments, modular quantum computing systems, such as those described with regard to FIGs. 9, 11, and 12 herein, may include QPUs that span several different premises within elastic quantum computing service provider network 1300. For example, QPUs 1304 and 1312 may be co-located at premises of service provider network 1302a. While QPUs 1304 and 1312 may be co-located at a same premises, said QPUs are still physically separated from one another by at least one optical communications link. For example, as shown in FIG. 13, QPUs 1304 and 1312 may be configured to provide distributed quantum computation via optical communications links 1324 and 1326, and via routing through quantum repeater 1330. In some embodiments, quantum repeater 1330 may be located at a same or different premises of service provider network. For example, premises of service provider network 1302a and 1302b may resemble physically separated components QPUs 1304 and 1312 and quantum repeater 1330 that are located at a given data center of elastic quantum computing service provider network 1300. In another example, QPUs 1304 and 1312 may be located at a first data center of elastic quantum computing service provider network 1300, and may be configured to provide distributed quantum computation via optical communications links 1324 and 1326 with quantum repeater 1330, located at a second data center of elastic quantum computing service provider network 1300.

As additionally described above, various optical transducers 1306 and 1314, optical switchboards 1308 and 1316, and quantum memories sets 1310 and 1318 may be configured to aid in orchestration of providing distributed quantum computation, and according to various qubit technology groupings of QPUs 1304 and 1312.

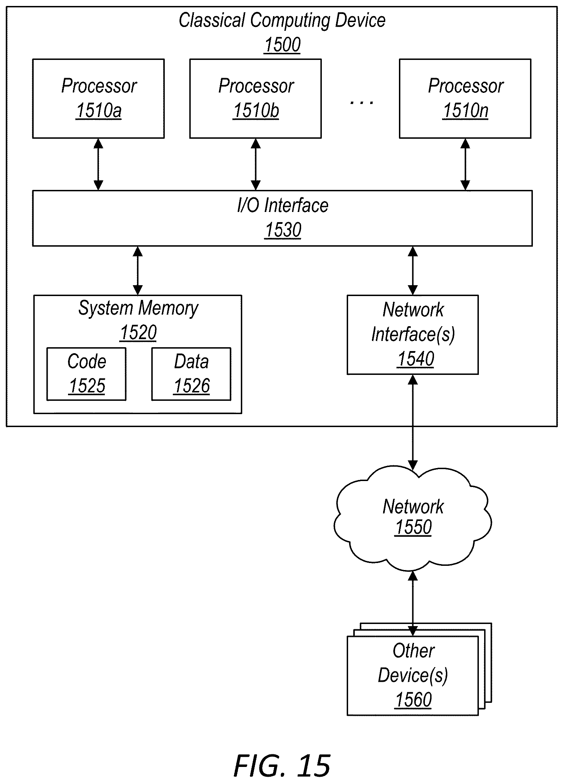

In some embodiments, classical compute resources 1332 may be configured to allocate various QPUs made available via elastic quantum computing service provider network 1300 to be used in executing a given quantum circuit, and may then subsequently determine and distribute gate scheduling instructions for execution of the given quantum circuit. In some embodiments, classical compute resources 1332 may resemble one or more classical computing devices 1500 and/or have similar functionalities as classical computing devices 1500, as additionally described with regard to FIG. 15 herein.

In some embodiments, elastic quantum computing service provider network 1300 may be configured to provide distributed quantum computation across one or more QPUs that are external to said service provider network, such as any QPU located at quantum hardware provider premises 1320. In such embodiments, quantum repeater 1322 may be used to interface with respective ones of the physical qubits of a given QPU located at quantum hardware provider premises 1320, and teleport quantum information pertaining to the distributed quantum computation to and/or from the QPU located at quantum hardware provider premises 1320. Furthermore, there may be a large geographical distance between quantum hardware provider premises 1320 and premises of service provider network 1302, as represented by optical communications link 1328. In such embodiments, a modular quantum computing system such as that which is shown in FIG. 13 may be configured to provide verifiably blind quantum computing services, offering additional quantum secure computing services for customers of elastic quantum computing service provider network 1300.

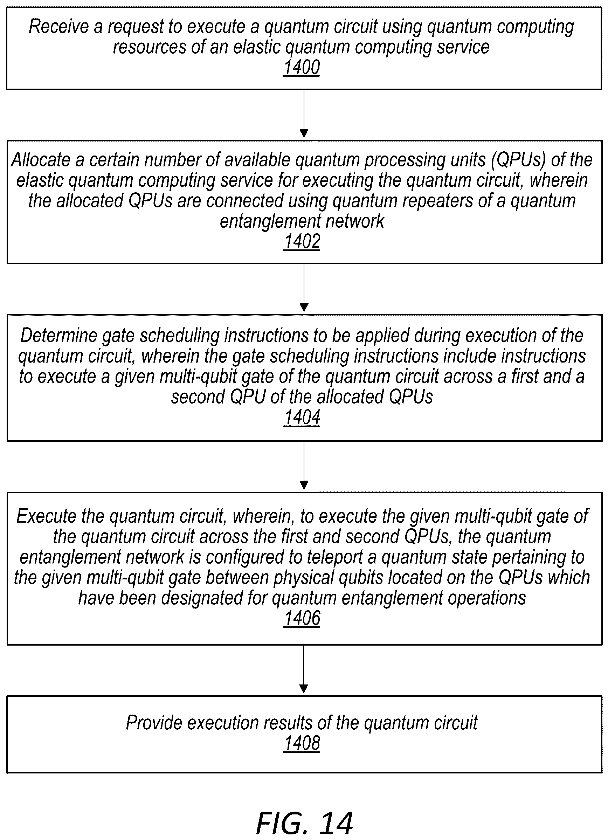

FIG. 14 is a flowchart illustrating a process of executing a quantum circuit using modular quantum computing resources of an elastic quantum computing service, according to some embodiments.

In block 1400, a request is received to execute a quantum circuit using two or more QPUs that are made accessible by an elastic quantum computing service, wherein the two or more QPUs are remotely connected using a quantum entanglement network. As additionally described above, buffers of established, pairwise quantum entanglement instances may be prepared and maintained in order to provide on-demand distributed quantum computation services to customers of the elastic quantum computing service, and without enduring latency that is usually required when pre-prepared quantum entanglement is not proactively pre-established for such distributed quantum computations.

In block 1402, the elastic quantum computing service may determine a minimum number of physical qubits that are expected to be needed to execute the quantum circuit, and therefore allocate a given number (e.g., at least two or more) of QPUs to be used to execute the quantum circuit.

In block 1404, classical compute resources of the elastic quantum computing service, such as classical compute resources 1332, may be used to determine gate scheduling instructions such that said service may orchestrate the execution of the quantum circuit across the multiple allocated QPUs. As discussed above with regard to FIG. 10B, gate scheduling instructions include instructions for at least one multi-qubit quantum gate that is to be performed using physical qubits of two or more of the allocated QPUs.

In block 1406, during execution of the quantum circuit, a quantum entanglement network, utilized by the elastic quantum computing service, is configured to teleport a quantum state pertaining to the given multi-qubit quantum gate between a physical qubit of a first QPU of the allocated QPUs and a physical qubit of a second QPU of the allocated QPUs. In block 1408, following completion of remaining quantum gates of the given quantum circuit, execution results are provided.

Embodiments of the present disclosure may be described in view of the following clauses:
Clause 1. A modular quantum computing system, comprising:
   a quantum entanglement network subsystem configured to remotely connect separate quantum processing units (QPUs) using optical communications links; and
   a first QPU comprising:
      a first set of physical qubits, designated for quantum computation operations; and
      a second set of physical qubits, designated for quantum entanglement operations; and
   a second QPU comprising:
      a third set of physical qubits, designated for quantum computation operations; and
      a fourth set of physical qubits, designated for quantum entanglement operations,
   wherein, to execute a given multi-qubit gate of a given quantum circuit between a respective one of the first set of physical qubits and a respective one of the third set of physical qubits, the quantum entanglement network subsystem is further configured to:
      teleport a quantum state of a respective one of the second set of physical qubits to a respective one of the fourth set of physical qubits.
Clause 2. The modular quantum computing system of clause 1, wherein:
   the quantum entanglement network subsystem comprises:
      a first quantum repeater, locally connected to the first QPU, wherein the first quantum repeater comprises a first set of quantum memories; and
      a second quantum repeater, locally connected to the second QPU, wherein the second quantum repeater comprises a second set of quantum memories; and
   the quantum entanglement network subsystem is further configured to:
      establish one or more pairwise quantum entanglement instances, using one or more of the optical communications links, with respective ones of the first set of quantum memories of the first quantum repeater and respective other ones of the second set of quantum memories of the second quantum repeater.
Clause 3. The modular quantum computing system of clause 2 or clause 3, wherein:
   the first quantum repeater further comprises a first optical switchboard;
   to teleport the quantum state of the respective one of the second set of physical qubits to the respective one of the fourth set of physical qubits, the first optical switchboard is configured to perform a Bell state measurement between the respective one of the second set of physical qubits and a given quantum memory of the first set of quantum memories;
   the second quantum repeater further comprises a second optical switchboard; and
   to teleport the quantum state, the second optical switchboard is configured to perform a Bell state measurement between the respective one of the fourth set of physical qubits and another given quantum memory of the second set of quantum memories.
Clause 4. The modular quantum computing system of clause 3, wherein:
   the first quantum repeater further comprises an optical transducer configured to enable the first optical switchboard to interface with signals obtained from the second set of physical qubits in the first QPU.
Clause 5. The modular quantum computing system of any of clauses 1 through 4, wherein to execute the given multi-qubit gate of the given quantum circuit between the respective one of the first set of physical qubits and the respective one of the third set of physical qubits, the first QPU is further configured to:
   execute one or more SWAP gate operations between the respective one of the first set of physical qubits, one or more other physical qubits of the first set of physical qubits, and the respective one of the second set of physical qubits.
Clause 6. The modular quantum computing system of any of clauses 1 through 5, wherein the first QPU is further configured to execute one or more additional gates of the quantum circuit between respective other ones of the first set of physical qubits.
Clause 7. A system, comprising:
   one or more classical computing devices of a service provider network configured to implement an elastic quantum computing service configured to orchestrate execution of quantum circuits using a plurality of quantum processing units (QPUs) made accessible via the service provider network, wherein, to implement the elastic quantum computing service, the one or more classical computing devices are further configured to:
      allocate a number QPUs, of the plurality of QPUs, to be used in executing a given quantum circuit; and
      determine gate scheduling instructions to be applied during execution of the given quantum circuit across the allocated number of QPUs, wherein, to determine the gate scheduling instructions, the one or more classical computing devices are further configured to schedule a multi-qubit gate to be executed using a physical qubit of a first QPU and a physical qubit of a second QPU of the allocated number of QPUs; and
   a quantum entanglement network comprising a plurality of quantum repeaters locally connected to respective ones of the plurality of QPUs,
   wherein to execute the multi-qubit gate using the physical qubit of the first QPU and the physical qubit of the second QPU, the quantum entanglement network is configured to cause quantum entanglement to be generated between a first quantum repeater of the plurality of quantum repeaters, locally connected to the first QPU, and a second quantum repeater of the plurality of quantum repeaters, locally connected to the second QPU.
Clause 8. The system of clause 7, wherein to allocate the number of QPUs to be used in executing the given quantum circuit, the one or more classical computing devices implementing the elastic quantum computing service are further configured to:
   determine a minimum number of physical qubits that are to be used to execute the given quantum circuit based, at least in part, on a given compiled version of the quantum circuit;
   determine one or more combinations of QPUs of the plurality of QPUs that result in at least the minimum number of physical qubits; and
   allocate the number of QPUs to be used in executing the given quantum circuit based, at least in part, on the one or more combinations of QPUs.
Clause 9. The system of clause 8, wherein to determine the one or more combinations of QPUs of the plurality of QPUs that result in at least the minimum number of physical qubits, the one or more classical computing devices implementing the elastic quantum computing service are further configured to:
   determine QPUs of the plurality of QPUs that are currently allocated, or are scheduled to be allocated, for use in executing other quantum circuits; and
   determine the one or more combinations of QPUs of the plurality of QPUs that result in at least the minimum number of physical qubits based, at least in part, on the determination of the QPUs of the plurality of QPUs that are currently allocated, or are scheduled to be allocated, for use in executing the other quantum circuits.
Clause 10. The system of any of clauses 7 through 9, wherein the one or more classical computing devices implementing the elastic quantum computing service are further configured to:
   generate quantum entanglement instructions to be provided to the quantum entanglement network prior to the execution of the given quantum circuit across the allocated number of QPUs, wherein the quantum entanglement instructions indicate one or more pairwise quantum entanglement instances that are to be established between respective ones of the plurality of quantum repeaters based, at least in part, on the determined gate scheduling instructions.
Clause 11. The system of clause 10, wherein the quantum entanglement network is configured to establish the one or more pairwise quantum entanglement instances between the respective ones of the plurality of quantum repeaters based, at least in part, on the provided quantum entanglement instructions.
Clause 12. The system of clause 11, wherein:
   the quantum entanglement network is further configured to maintain a buffer of the established one or more pairwise quantum entanglement instances such that a rate of establishing the one or more pairwise quantum entanglement instances is higher than a rate of decay of the one or more pairwise quantum entanglement instances; and
   the rate of decay of the one or more pairwise quantum entanglement instances is based, at least in part, on coherence times of qubits within respective quantum memory locations of the respective ones of the plurality of quantum repeaters.
Clause 13. The system of any of clauses 7 through 12, wherein:
   to determine the gate scheduling instructions of the given quantum circuit across the allocated number of QPUs, the one or more classical computing devices are further configured to schedule a subsequent multi-qubit gate to be executed using an additional physical qubit of the first QPU and a physical qubit of a third QPU of the allocated number of QPUs; and
   the subsequent multi-qubit gate is dependent upon, at least in part, an output of the multi-qubit gate to be executed using the physical qubit of the first QPU and the physical qubit of the second QPU.
Clause 14. The system of any of clauses 7 through 13, wherein:
   the system further comprises a third quantum repeater, configured to establish one or more pairwise quantum entanglement instances with the first repeater, and one or more additional pairwise quantum entanglement instances with the second repeater; and
   to execute the multi-qubit gate using the physical qubit of the first QPU and the physical qubit of the second QPU, the quantum entanglement network is configured to cause distributed quantum entanglement to be generated between the first quantum repeater and the third quantum repeater, and between the third second quantum repeater and the second quantum repeater.
Clause 15. The system of any of clauses 7 through 14, wherein:
   the first QPU is located at a premises within the service provider network;
   the first quantum repeater comprises:
      a set of quantum memories; and
      an optical switchboard; and
   to execute the multi-qubit gate using the physical qubit of the first QPU and the physical qubit of the second QPU, the optical switchboard is configured to perform a Bell state measurement between a given quantum memory of the set of quantum memories and another physical qubit of the first QPU, designated for quantum entanglement operations.
Clause 16. The system of clause 15, wherein:
   the second QPU is located at the premises within the service provider network;
   the second quantum repeater comprises:
      another set of quantum memories; and
      another optical switchboard; and
   to execute the multi-qubit gate using the physical qubit of the first QPU and the physical qubit of the second QPU, the other optical switchboard is configured to perform another Bell state measurement between another given quantum memory of the other set of quantum memories and another physical qubit of the second QPU, designated for quantum entanglement operations, wherein the other given quantum memory of the other set of quantum memories within the second QPU corresponds to an established, pairwise quantum entanglement instance with the given quantum memory of the set of quantum memories within the first QPU.
Clause 17. A method, comprising:
   receiving a request from a customer of an elastic quantum computing service to execute a quantum circuit using quantum computing resources of the elastic quantum computing service;
   allocating a number of quantum processing units (QPUs), of a plurality of QPUs made available by the elastic quantum computing service, for use in executing the quantum circuit, wherein the allocated QPUs are remotely connected using quantum repeaters of a quantum entanglement network;
   executing the quantum circuit using the allocated QPUs, wherein said executing the quantum circuit comprises:
      executing a given multi-qubit gate of the quantum circuit between a physical qubit of a first QPU of the allocated QPUs and a physical qubit of a second QPU of the allocated QPUs, wherein said executing the given multi-qubit gate comprises teleporting a quantum state, pertaining to the given multi-qubit gate, between another physical qubit of the first QPU, designated for quantum entanglement operations, and another physical qubit of the second QPU, designated for quantum entanglement operations; and
   providing execution results of the quantum circuit to the customer.
Clause 18. The method of clause 17, wherein said executing the given multi-qubit gate of the quantum circuit between the physical qubit of the first QPU and the physical qubit of the second QPU further comprises:
   executing, prior to said teleporting the quantum state, one or more SWAP gate operations between the physical qubit of the first QPU and the other physical qubit of the first QPU, designated for quantum entanglement operations.
Clause 19. The method of clause 17 or clause 18, wherein said executing the quantum circuit using the allocated QPUs further comprises:
   responsive to said executing the given multi-qubit gate of the quantum circuit between the physical qubit of the first QPU and the physical qubit of the second QPU,
   executing one or more subsequent multi-qubit gates of the quantum circuit using one or more of the allocated QPUs, wherein the one or more subsequent multi-qubit gates are dependent upon, at least in part, an output of the multi-qubit gate executed between the physical qubit of the first QPU and the physical qubit of the second QPU.
Clause 20. The method of any of clauses 17 through 19, wherein said allocating the number of QPUs for use in executing the quantum circuit comprises:
   determining a minimum number of physical qubits that are to be used to execute the quantum circuit based, at least in part, on a given compiled version of the quantum circuit;
   determining one or more combinations of QPUs of the plurality of QPUs that result in at least the minimum number of physical qubits; and
   allocating the number of QPUs based, at least in part, on the one or more combinations of QPUs.
Clause 21. A system, comprising:
   a first quantum repeater of a service provider network comprising:
      a first set of the quantum memories;
      a second set of quantum memories, wherein the first quantum repeater is configured to maintain a buffer of established, pairwise quantum entanglement instances between the second set of quantum memories and a third set of quantum memories of a second quantum repeater;
      an optical switchboard configured to perform a Bell state measurement between any of the quantum memories of the first set and any of the quantum memories of the second set; and
      an interface configured to indicate a result of the Bell state measurement; and
   the second quantum repeater of the service provider network, connected to the first quantum repeater by an optical communications link, wherein the second quantum repeater comprises:
      the third set of quantum memories, wherein the second quantum repeater is configured to maintain the buffer of established, pairwise quantum entanglement instances using the third set of quantum memories.
Clause 22. The system of clause 21, wherein:
   the first and the second quantum repeaters are configured to maintain the buffer of established, pairwise quantum entanglement instances such that a rate of establishing the pairwise quantum entanglement instances is higher than a rate of decay of the pairwise quantum entanglement instances; and
   the rate of decay of the pairwise quantum entanglement instances is based, at least in part, on coherence times of qubits within the respective quantum memories of the second set of quantum memories and the third set of quantum memories.
Clause 23. The system of clause 21 or clause 22, wherein the first and the second quantum repeaters are configured to apply wavelength divisional multiplexing to enable multiple, coexisting pairwise quantum entanglement instances across the optical communications link.
Clause 24. The system of any of clauses 21 through 23, wherein the optical switchboard is further configured to select a given quantum memory of the second set to be used in a given Bell state measurement based, at least in part, on a determination that a given established, pairwise quantum entanglement instance, corresponding to the given quantum memory of the second set, has been established more recently than another one of the established, pairwise quantum entanglement instances.
Clause 25. The system of any of clauses 21 through 23, wherein the optical switchboard is further configured to select a given quantum memory of the second set to be used in a given Bell state measurement based, at least in part, on a determination that a given established, pairwise quantum entanglement instance, corresponding to the given quantum memory of the second set, has been established less recently than another one of the established, pairwise quantum entanglement instances.
Clause 26. The system of any of clauses 21 through 25, wherein:
   the first quantum repeater further comprises a fourth set of quantum memories, wherein the first quantum repeater is further configured to maintain an additional buffer of established, pairwise quantum entanglement instances between the fourth set of quantum memories and a fifth set of quantum memories of a third quantum repeater of the service provider network; and
   the optical switchboard is further configured to perform a Bell state measurement between any of the quantum memories of the first set and any of the quantum memories of the fourth set.
Clause 27. The system of clause 26, wherein:
   the first quantum repeater is further configured to logically redesignate one or more of the quantum memories of the second set to the fourth set of quantum memories such that the additional buffer of established, pairwise quantum entanglement instances between the first and the third quantum repeaters increases; and
   the redesignation is based, at least in part, on:
      a rate of usage of the buffer of established, pairwise quantum entanglement instances between the first and second quantum repeaters; and
      another rate of usage of the additional buffer of established, pairwise quantum entanglement instances between the first and third quantum repeaters.
Clause 28. The system of any of clauses 21 through 27, wherein:
   the first quantum repeater further comprises one or more classical computing devices configured to:
   receive a heralding signal, indicating that quantum information has been stored in a given quantum memory of the first set; and
   provide quantum memory storage information, indicating a particular quantum memory location of the given quantum memory of the first set, to the optical switchboard for performance of the Bell state measurement.
Clause 29. The system of clause 28, wherein:
   the one or more classical computing devices are further configured to receive, via the interface, the result of the Bell state measurement; and
   provide the result of the Bell state measurement to one or more additional classical computing devices of the service provider network for use in providing distributed quantum entanglement.
Clause 30. The system of any of clauses 21 through 29, wherein, responsive to said performance of the Bell state measurement, the first and the second quantum repeaters are further configured to:
   reattempt establishing another pairwise quantum entanglement instance, using a respective available quantum memory of the second set and a respective available quantum memory of the third set, such that the buffer of established, pairwise quantum entanglement instances is maintained.
Clause 31. A system, comprising:
   a quantum entanglement network of a service provider network comprising a plurality of quantum repeaters, wherein:
      the quantum entanglement network is configured to maintain a buffer of established, pairwise quantum entanglement instances between quantum memory locations of respective ones of the quantum repeaters; and
      the plurality of quantum repeaters are quantum repeaters of a service provider network; and
   one or more classical computing devices of the service provider network configured to implement a distributed quantum entanglement service configured to orchestrate distributed quantum entanglement across endpoints of the service provider network, using respective ones of the plurality of quantum repeaters, wherein, to implement the distributed quantum entanglement service, the one or more classical computing devices are further configured to:
      receive a request from a customer of the distributed quantum entanglement service to provide distributed quantum entanglement between an endpoint of the customer and another endpoint of the service provider network;
      determine an optical communications pathway between the endpoint of the customer and the other endpoint of the service provider network, wherein the optical communications pathway comprises intersection points at one or more of the plurality of quantum repeaters; and
      cause the distributed quantum entanglement to be provided using respective ones of the already established, pairwise quantum entanglement instances, maintained in the buffer, between quantum memory locations of the one or more quantum repeaters.
Clause 32. The system of clause 31, wherein:
   a given one of the plurality of quantum repeaters comprises an optical switchboard configured to perform Bell state measurements between any two quantum memory locations within the given one of the plurality of quantum repeaters; and
   to cause the distributed quantum entanglement to be provided using the respective ones of the already established, pairwise quantum entanglement instances, maintained in the buffer, between quantum memory locations of the one or more quantum repeaters,
      the given one of the plurality of quantum repeaters is configured to provide a result of a Bell state measurement corresponding to one of the already established, pairwise quantum entanglement instances in the buffer.
Clause 33. The system of clause 31 or clause 32, wherein:
   the quantum entanglement network is configured to maintain the buffer of established, pairwise quantum entanglement instances between quantum memory locations of respective ones of the quantum repeaters such that a rate of establishing the pairwise quantum entanglement instances is higher than a rate of decay of the pairwise quantum entanglement instances; and
   the rate of decay of the pairwise quantum entanglement instances is based, at least in part, on coherence times of qubits within the respective quantum memory locations of the respective ones of the quantum repeaters.
Clause 34. The system of any of clauses 31 through 33, wherein:
   the quantum entanglement network is configured to maintain the buffer of established, pairwise quantum entanglement instances between quantum memory locations of respective ones of the quantum repeaters such that a rate of establishing the pairwise quantum entanglement instances is higher than a rate of consumption of the pairwise quantum entanglement instances; and
   the rate of consumption of the pairwise quantum entanglement instances is based, at least in part, on said causation of the distributed quantum entanglement to be provided using respective ones of the already established, pairwise quantum entanglement instances, maintained in the buffer.
Clause 35. The system of any of clauses 31 through 34, wherein to orchestrate distributed quantum entanglement, the one or more classical computing devices implementing the distributed quantum entanglement service are further configured to:
   evaluate elapsed time periods subsequent to establishment of respective ones of the established, pairwise quantum entanglement instances in the buffer; and
   responsive to a detection that a given one of the evaluated elapsed time periods is greater than coherence times of qubits within respective quantum memory locations corresponding to the given one of the already established, pairwise quantum entanglement instances,
      cause establishment of another pairwise quantum entanglement instance, corresponding to the respective quantum memory locations, to be reattempted such that the buffer is maintained.
Clause 36. The system of any of clauses 31 through 35, wherein to orchestrate distributed quantum entanglement, the one or more classical computing devices implementing the distributed quantum entanglement service are further configured to:
   responsive to said causation of the distributed quantum entanglement to be provided using respective ones of the already established, pairwise quantum entanglement instances, maintained in the buffer,
   cause establishment of one or more additional pairwise quantum entanglement instances to be reattempted such that the buffer is maintained.
Clause 37. The system of any of clauses 31 through 36, wherein to orchestrate distributed quantum entanglement, the one or more classical computing devices implementing the distributed quantum entanglement service are further configured to:
   monitor rates of consumption of the established, pairwise quantum entanglement instances within the buffer between the respective ones of the quantum repeaters; and
   cause one or more of the quantum memory locations within a given one of the quantum repeaters of the plurality to be logically redesignated for use in establishing other pairwise quantum entanglement instances with a different quantum repeater of the plurality based, at least in part, in a change in the monitored rates of consumption.
Clause 38. A method, comprising:
   maintaining a buffer of established, pairwise quantum entanglement instances between quantum memory locations of a first quantum repeater and quantum memory locations of a second quantum repeater, wherein the first and second quantum repeaters are quantum repeaters of a service provider network; and
   responsive to receiving a request, from a customer of the service provider network, to provide distributed quantum entanglement between an endpoint of the customer and another endpoint of the service provider network,
      performing a Bell state measurement, using an optical switchboard within the first quantum repeater, between:
         one of the quantum memory locations of the first quantum repeater, corresponding to one of the established, pairwise quantum entanglement instances in the buffer; and
         another quantum memory location of the first quantum repeater, corresponding to a location storing quantum information pertaining to an entangled photon received at the first quantum repeater;
      performing another Bell state measurement, using an optical switchboard within the second quantum repeater, between:
         one of the quantum memory locations of the second quantum repeater, corresponding to the one of the established, pairwise quantum entanglement instances in the buffer; and
         another quantum memory location of the second quantum repeater, corresponding to a location storing quantum information pertaining to another entangled photon received at the second quantum repeater; and
      providing a result of the Bell state measurement, performed within the first quantum repeater, and a result of the other Bell state measurement, performed within the second quantum repeater.
Clause 39. The method of clause 38, further comprising:
   responsive to said performing the Bell state measurement and said performing the other Bell state measurement, corresponding to the one of the established, pairwise quantum entanglement instances in the buffer,
   re-establishing another pairwise quantum entanglement instance between the first and second quantum repeaters such that the buffer is maintained.
Clause 40. The method of clause 38 or clause 39, further comprising:
   evaluating elapsed time periods subsequent to establishment of respective ones of the established, pairwise quantum entanglement instances in the buffer; and
   responsive to detecting that a given one of the evaluated elapsed time periods is greater than coherence times of qubits within the respective quantum memory locations of the first and second quantum repeaters,
      re-establishing another pairwise quantum entanglement instance, such that the buffer is maintained.

### Illustrative computer system

FIG. 15 is a block diagram illustrating an example computing device that may be used in at least some embodiments.

FIG. 15 illustrates such a general-purpose classical computing device 1500 as may be used in any of the embodiments described herein. In the illustrated embodiment, classical computing device 1500 includes one or more processors 1510 coupled to a system memory 1520 (which may comprise both non-volatile and volatile memory modules) via an input/output (I/O) interface 1530. Classical computing device 1500 further includes a network interface 1540 coupled to I/O interface 1530.

In various embodiments, classical computing device 1500 may be a uniprocessor system including one processor 1510, or a multiprocessor system including several processors 1510 (e.g., two, four, eight, or another suitable number). Processors 1510 may be any suitable processors capable of executing instructions. For example, in various embodiments, processors 1510 may be general-purpose or embedded processors implementing any of a variety of instruction set architectures (ISAs), such as the x86, PowerPC, SPARC, or MIPS ISAs, or any other suitable ISA. In multiprocessor systems, each of processors 1510 may commonly, but not necessarily, implement the same ISA. In some implementations, graphics processing units (GPUs) may be used instead of, or in addition to, conventional processors.

System memory 1520 may be configured to store instructions and data accessible by processor(s) 1510. In at least some embodiments, the system memory 1520 may comprise both volatile and non-volatile portions; in other embodiments, only volatile memory may be used. In various embodiments, the volatile portion of system memory 1520 may be implemented using any suitable memory technology, such as static random-access memory (SRAM), synchronous dynamic RAM or any other type of memory. For the non-volatile portion of system memory (which may comprise one or more NVDIMMs, for example), in some embodiments flash-based memory devices, including NAND-flash devices, may be used. In at least some embodiments, the non-volatile portion of the system memory may include a power source, such as a supercapacitor or other power storage device (e.g., a battery). In various embodiments, memristor based resistive random access memory (ReRAM), three-dimensional NAND technologies, Ferroelectric RAM, magnetoresistive RAM (MRAM), or any of various types of phase change memory (PCM) may be used at least for the non-volatile portion of system memory. In the illustrated embodiment, program instructions and data implementing one or more desired functions, such as those methods, techniques, and data described above, are shown stored within system memory 1520 as code 1525 and data 1526.

In some embodiments, I/O interface 1530 may be configured to coordinate I/O traffic between processor 1510, system memory 1520, and any peripheral devices in the device, including network interface 1540 or other peripheral interfaces such as various types of persistent and/or volatile storage devices. In some embodiments, I/O interface 1530 may perform any necessary protocol, timing or other data transformations to convert data signals from one component (e.g., system memory 1520) into a format suitable for use by another component (e.g., processor 1510). In some embodiments, I/O interface 1530 may include support for devices attached through various types of peripheral buses, such as a variant of the Peripheral Component Interconnect (PCI) bus standard or the Universal Serial Bus (USB) standard, for example. In some embodiments, the function of I/O interface 1530 may be split into two or more separate components, such as a north bridge and a south bridge, for example. Also, in some embodiments some or all of the functionality of I/O interface 1530, such as an interface to system memory 1520, may be incorporated directly into processor 1510.

Network interface 1540 may be configured to allow data to be exchanged between classical computing device 1500 and other devices 1560 attached to a network or networks 1550, such as other computer systems or devices as illustrated in FIG. 1 through FIG. 14, for example. In various embodiments, network interface 1540 may support communication via any suitable wired or wireless general data networks, such as types of Ethernet network, for example. Additionally, network interface 1540 may support communication via telecommunications/telephony networks such as analog voice networks or digital fiber communications networks, via storage area networks such as Fibre Channel SANs, or via any other suitable type of network and/or protocol.

In some embodiments, system memory 1520 may represent one embodiment of a computer-accessible medium configured to store at least a subset of program instructions and data used for implementing the methods and apparatus discussed in the context of FIG. 1 through FIG. 14. However, in other embodiments, program instructions and/or data may be received, sent or stored upon different types of computer-accessible media. Generally speaking, a computer-accessible medium may include non-transitory storage media or memory media such as magnetic or optical media, e.g., disk or DVD/CD coupled to classical computing device 1500 via I/O interface 1530. A non-transitory computer-accessible storage medium may also include any volatile or non-volatile media such as RAM (e.g., SDRAM, DDR SDRAM, RDRAM, SRAM, etc.), ROM, etc., that may be included in some embodiments of classical computing device 1500 as system memory 1520 or another type of memory. In some embodiments, a plurality of non-transitory computer-readable storage media may collectively store program instructions that when executed on or across one or more processors implement at least a subset of the methods and techniques described above. A computer-accessible medium may further include transmission media or signals such as electrical, electromagnetic, or digital signals, conveyed via a communication medium such as a network and/or a wireless link, such as may be implemented via network interface 1540. Portions or all of multiple classical computing devices such as that illustrated in FIG. 15 may be used to implement the described functionality in various embodiments; for example, software components running on a variety of different devices and servers may collaborate to provide the functionality. In some embodiments, portions of the described functionality may be implemented using storage devices, network devices, or special-purpose computer systems, in addition to or instead of being implemented using general-purpose computer systems. The term "classical computing device", as used herein, refers to at least all these types of devices, and is not limited to these types of devices.

### Conclusion

Various embodiments may further include receiving, sending or storing instructions and/or data implemented in accordance with the foregoing description upon a computer-accessible medium. Generally speaking, a computer-accessible medium may include storage media or memory media such as magnetic or optical media, e.g., disk or DVD/CD-ROM, volatile or non-volatile media such as RAM (e.g. SDRAM, DDR, RDRAM, SRAM, etc.), ROM, etc., as well as transmission media or signals such as electrical, electromagnetic, or digital signals, conveyed via a communication medium such as network and/or a wireless link.

The various methods as illustrated in the Figures and described herein represent exemplary embodiments of methods. The methods may be implemented in software, hardware, or a combination thereof. The order of method may be changed, and various elements may be added, reordered, combined, omitted, modified, etc.

Various modifications and changes may be made as would be obvious to a person skilled in the art having the benefit of this disclosure. It is intended to embrace all such modifications and changes and, accordingly, the above description to be regarded in an illustrative rather than a restrictive sense.

## Claims

1. A modular quantum computing system (900), comprising:
a quantum entanglement network (932) subsystem configured to remotely connect separate quantum processing units, QPUs, (902, 930) using optical communications links (916); and
a first QPU (902) comprising:
a first set of physical qubits (*q₁, q₂, q*₃), designated for quantum computation operations; and
a second set of physical qubits (*q*₄, *q*₅), designated for quantum entanglement operations; and
a second QPU (930) comprising:
a third set of physical qubits (*q₁, q₂, q*₃), designated for quantum computation operations; and
a fourth set of physical qubits (*q*₄, *q*₅), designated for quantum entanglement operations,
wherein, to execute a given multi-qubit gate of a given quantum circuit (1000) between a respective one of the first set of physical qubits (*q₁, q₂, q*₃) and a respective one of the third set of physical qubits (*q₁, q*₂, *q*₃), the quantum entanglement network (932) subsystem is further configured to:
teleport a quantum state of a respective one of the second set of physical qubits (*q*₄, *q*₅) to a respective one of the fourth set of physical qubits (*q*₄, *q*₅).

2. The modular quantum computing system of claim 1, wherein:
the quantum entanglement network (932) subsystem comprises:
a first quantum repeater, locally connected to the first QPU (902), wherein the first quantum repeater comprises a first set of quantum memories (908); and
a second quantum repeater, locally connected to the second QPU (930), wherein the second quantum repeater comprises a second set of quantum memories (918); and
the quantum entanglement network (932) subsystem is further configured to:
establish one or more pairwise quantum entanglement instances, using one or more of the optical communications links (916), with respective ones of the first set of quantum memories (908) of the first quantum repeater and respective other ones of the second set of quantum memories (918) of the second quantum repeater.

3. The modular quantum computing system of claim 2, wherein:
the first quantum repeater further comprises a first optical switchboard (906);
to teleport the quantum state of the respective one of the second set of physical qubits (*q*₄, *q*₅) to the respective one of the fourth set of physical qubits (*q*₄, *q*₅), the first optical switchboard (906) is configured to perform a Bell state measurement (524) between the respective one of the second set of physical qubits (*q*₄, *q*₅) and a given quantum memory (910, 912, 914) of the first set of quantum memories (908);
the second quantum repeater further comprises a second optical switchboard (928); and
to teleport the quantum state, the second optical switchboard (928) is configured to perform a Bell state measurement (524) between the respective one of the fourth set of physical qubits (*q*₄, *q*₅) and another given quantum memory (920, 922, 924) of the second set of quantum memories (918).

4. The modular quantum computing system of claim 3, wherein:
the first quantum repeater further comprises an optical transducer (904) configured to enable the first optical switchboard (906) to interface with signals obtained from the second set of physical qubits (*q*₄, *q*₅) in the first QPU (902).

5. The modular quantum computing system of any of claims 1 through 4, wherein to execute the given multi-qubit gate of the given quantum circuit (1000) between the respective one of the first set of physical qubits (*q₁, q₂, q*₃) and the respective one of the third set of physical qubits (*q₁, q*₂, *q*₃), the first QPU (902) is further configured to:
execute one or more SWAP gate operations between the respective one of the first set of physical qubits (*q₁, q*₂, *q*₃), one or more other physical qubits of the first set of physical qubits (*q₁, q*₂, *q*₃), and the respective one of the second set of physical qubits (*q*₄, *q*₅).

6. The modular quantum computing system of any of claims 1 through 5, wherein the first QPU (902) is further configured to execute one or more additional gates of the quantum circuit (1000) between respective other ones of the first set of physical qubits (*q₁, q*₂, *q*₃)*.*

7. A system, comprising:
one or more classical computing devices (1332; 1500) of a service provider network (1300) configured to implement an elastic quantum computing service configured to orchestrate execution of quantum circuits (1000) using a plurality of quantum processing units, QPUs, (1304, 1312) made accessible via the service provider network (1300), wherein, to implement the elastic quantum computing service, the one or more classical computing devices (1332; 1500) are further configured to:
allocate a number of QPUs (1304, 1312), of the plurality of QPUs (1304, 1312), to be used in executing a given quantum circuit (1000); and
determine gate scheduling instructions to be applied during execution of the given quantum circuit (1000) across the allocated number of QPUs (1304, 1312), wherein, to determine the gate scheduling instructions, the one or more classical computing devices (1332; 1500) are further configured to schedule a multi-qubit gate to be executed using a physical qubit of a first QPU (1304, 1312) and a physical qubit of a second QPU (1304, 1312) of the allocated number of QPUs (1304, 1312); and
a quantum entanglement network (700) comprising a plurality of quantum repeaters (704, 706, 708, 712) locally connected to respective ones of the plurality of QPUs (1304, 1312),
wherein to execute the multi-qubit gate using the physical qubit of the first QPU (1304, 1312) and the physical qubit of the second QPU (1304, 1312), the quantum entanglement network (700) is configured to cause quantum entanglement to be generated between a first quantum repeater (704, 706, 708, 712) of the plurality of quantum repeaters (704, 706, 708, 712), locally connected to the first QPU (1304, 1312), and a second quantum repeater (704, 706, 708, 712) of the plurality of quantum repeaters (704, 706, 708, 712), locally connected to the second QPU (1304, 1312).

8. The system of claim 7, wherein to allocate the number of QPUs (1304, 1312) to be used in executing the given quantum circuit (1000), the one or more classical computing devices (1332; 1500) implementing the elastic quantum computing service are further configured to:
determine a minimum number of physical qubits that are to be used to execute the given quantum circuit (1000) based, at least in part, on a given compiled version of the quantum circuit (1000);
determine one or more combinations of QPUs (1304, 1312) of the plurality of QPUs (1304, 1312) that result in at least the minimum number of physical qubits;
allocate the number of QPUs (1304, 1312) to be used in executing the given quantum circuit (1000) based, at least in part, on the one or more combinations of QPUs (1304, 1312), and
wherein to determine the one or more combinations of QPUs (1304, 1312) of the plurality of QPUs (1304, 1312) that result in at least the minimum number of physical qubits, the one or more classical computing devices (1332; 1500) implementing the elastic quantum computing service are further configured to:
determine QPUs (1304, 1312) of the plurality of QPUs (1304, 1312) that are currently allocated, or are scheduled to be allocated, for use in executing other quantum circuits (1000); and
determine the one or more combinations of QPUs (1304, 1312) of the plurality of QPUs (1304, 1312) that result in at least the minimum number of physical qubits based, at least in part, on the determination of the QPUs (1304, 1312) of the plurality of QPUs (1304, 1312) that are currently allocated, or are scheduled to be allocated, for use in executing the other quantum circuits (1000).

9. The system of any of claims 7 or 8, wherein the one or more classical computing devices (1332; 1500) implementing the elastic quantum computing service are further configured to:
generate quantum entanglement instructions to be provided to the quantum entanglement network (700) prior to the execution of the given quantum circuit (1000) across the allocated number of QPUs (1304, 1312), wherein the quantum entanglement instructions indicate one or more pairwise quantum entanglement instances that are to be established between respective ones of the plurality of quantum repeaters (704, 706, 708, 712) based, at least in part, on the determined gate scheduling instructions.

10. The system of claim 9, wherein the quantum entanglement network (700) is configured to:
establish the one or more pairwise quantum entanglement instances between the respective ones of the plurality of quantum repeaters (704, 706, 708, 712) based, at least in part, on the provided quantum entanglement instructions;
maintain a buffer of the established one or more pairwise quantum entanglement instances such that a rate of establishing the one or more pairwise quantum entanglement instances is higher than a rate of decay of the one or more pairwise quantum entanglement instances; and
the rate of decay of the one or more pairwise quantum entanglement instances is based, at least in part, on coherence times of qubits within respective quantum memory locations (754, 756, 758, 762, 764, 766, 770, 772, 774, 776, 782, 784, 786, 788, 792, 794, 796, 798) of the respective ones of the plurality of quantum repeaters (704, 706, 708, 712).

11. The system of any of claims 7 through 10, wherein:
to determine the gate scheduling instructions of the given quantum circuit (1000) across the allocated number of QPUs (1304, 1312), the one or more classical computing devices (1332; 1500) are further configured to schedule a subsequent multi-qubit gate to be executed using an additional physical qubit of the first QPU (1304, 1312) and a physical qubit of a third QPU (1304, 1312) of the allocated number of QPUs (1304, 1312); and
the subsequent multi-qubit gate is dependent upon, at least in part, an output of the multi-qubit gate to be executed using the physical qubit of the first QPU (1304, 1312) and the physical qubit of the second QPU (1304, 1312).

12. The system of any of claims 7 through 11, wherein:
the system further comprises a third quantum repeater (704, 706, 708, 712), configured to establish one or more pairwise quantum entanglement instances with the first repeater (704, 706, 708, 712), and one or more additional pairwise quantum entanglement instances with the second repeater (704, 706, 708, 712); and
to execute the multi-qubit gate using the physical qubit of the first QPU (1304, 1312) and the physical qubit of the second QPU (1304, 1312), the quantum entanglement network (700) is configured to cause distributed quantum entanglement to be generated between the first quantum repeater (704, 706, 708, 712) and the third quantum repeater (704, 706, 708, 712), and between the third second quantum repeater (704, 706, 708, 712) and the second quantum repeater (704, 706, 708, 712).

13. The system of any of claims 7 through 12, wherein:
the first QPU is located at a premises within the service provider network;
the first quantum repeater comprises:
a set of quantum memories; and
an optical switchboard;
to execute the multi-qubit gate using the physical qubit of the first QPU and the physical qubit of the second QPU, the optical switchboard is configured to perform a Bell state measurement between a given quantum memory of the set of quantum memories and another physical qubit of the first QPU, designated for quantum entanglement operations
the second QPU is located at the premises within the service provider network;
the second quantum repeater comprises:
another set of quantum memories; and
another optical switchboard; and
to execute the multi-qubit gate using the physical qubit of the first QPU and the physical qubit of the second QPU, the other optical switchboard is configured to perform another Bell state measurement between another given quantum memory of the other set of quantum memories and another physical qubit of the second QPU, designated for quantum entanglement operations, wherein the other given quantum memory of the other set of quantum memories within the second QPU corresponds to an established, pairwise quantum entanglement instance with the given quantum memory of the set of quantum memories within the first QPU.

14. A method, comprising:
receiving (1400) a request from a customer of an elastic quantum computing service to execute a quantum circuit using quantum computing resources of the elastic quantum computing service;
allocating (1402) a number of quantum processing units (QPUs), of a plurality of QPUs made available by the elastic quantum computing service, for use in executing the quantum circuit, wherein the allocated QPUs are remotely connected using quantum repeaters of a quantum entanglement network;
executing the quantum circuit using the allocated QPUs, wherein said executing the quantum circuit comprises:
executing (1406) a given multi-qubit gate of the quantum circuit between a physical qubit of a first QPU of the allocated QPUs and a physical qubit of a second QPU of the allocated QPUs, wherein said executing the given multi-qubit gate comprises teleporting a quantum state, pertaining to the given multi-qubit gate, between another physical qubit of the first QPU, designated for quantum entanglement operations, and another physical qubit of the second QPU, designated for quantum entanglement operations; and
providing (1408) execution results of the quantum circuit to the customer.

15. The method of claim 14, wherein said executing (1406) the given multi-qubit gate of the quantum circuit between the physical qubit of the first QPU and the physical qubit of the second QPU further comprises:
executing, prior to said teleporting the quantum state, one or more SWAP gate operations between the physical qubit of the first QPU and the other physical qubit of the first QPU, designated for quantum entanglement operations.
